# EUROPEAN PATENT APPLICATION

(11) **EP 4 830 519 A1**
(43) Date of publication of application: **28.10.2026**
(21) Application number: 24907485.7
(22) Date of filing: 19.12.2024
(51) Int. Cl.: A01M 7/00, B05B 17/00

(54) **WORK VEHICLE**

(30) Priority: 20.12.2023 JP 2023214861
(71) Applicant: KUBOTA CORPORATION, Osaka-shi, Osaka 530-0011 (JP); Maruyama MFG. Co., Inc., Tokyo 101-0047 (JP)
(72) Inventor: TAKEMURA Toshihiko, Sakai-shi, Osaka 590-0908 (JP); SUDA Masanori, Tokyo 101-0047 (JP)
(74) Representative: Müller-Boré & Partner Patentanwälte PartG mbB
(86) International application number: PCT/JP2024/044916
(87) International publication number: WO 2025/135101

(57) **Abstract**

Provided is a working vehicle (1) in which a thermal load on a material storage portion is small, and which provides excellent maneuverability.

A working vehicle includes a vehicle body (2), a prime mover (3) provided on the vehicle body, a traveling device (4) to support the vehicle body such that the vehicle body is allowed to travel, a material storage portion (5) to store a work material which is a material for work, and a radiator assembly (10) to cool a coolant circulated through the prime mover via heat exchange with outside air. A direction in which the vehicle body travels straight is a front-rear direction. The prime mover is provided forward of the material storage portion with an air passage chamber (20) between the prime mover and the material storage portion, the air passage chamber being a chamber in which the outside air flows. The radiator assembly is provided in the air passage chamber.

## Description

### Technical Field

The present invention relates to working vehicles each including a material storage portion.

### Background Art

A liquid chemical spreading vehicle to spread a liquid chemical over farms or orchards is known, as a working vehicle including a material storage portion to store a work material. The liquid chemical spreading vehicle disclosed in Patent Literature 1 includes a seat for a user, a liquid chemical tank to store a liquid chemical, and an engine room to store a prime mover which are arranged in this order from a front portion of a vehicle body toward a rear portion of the vehicle body.

### Citation List

### Patent Literature

PTL 1: Japanese Unexamined Patent Application Publication No. 2023-109308

### Summary of Invention

### Technical Problem

The working vehicle in which the engine room and the material storage portion are arranged in a front-rear direction, like the above-described liquid chemical spreading vehicle, includes a vehicle body having a relatively long total length. Therefore, when the working vehicle turns while traveling, the working vehicle needs to make a wide turn as compared to a normal turning route so that the material storage portion at the rear portion of the vehicle body does not contact an obstacle on the inside of the turn. One way to solve such maneuverability issues would be to reduce the total length of the vehicle body by placing the material storage portion as close to the engine room as possible. However, in this case, heat generated by high-temperature elements such as a prime mover in the engine room may result in deformation or deterioration of the material storage portion or may result in deterioration of the work material.

The present invention was made in view of the above issues, and an object of the present invention is to provide working vehicles in each of which the thermal load on the material storage portion is small and each of which has excellent maneuverability.

### Solution to Problem

The present invention includes the following technical feature(s) to achieve the above-described object.

A working vehicle according to an example embodiment of the present invention includes a vehicle body, a prime mover provided on the vehicle body, a traveling device to support the vehicle body such that the vehicle body is allowed to travel, a material storage portion to store a work material which is a material for work, and a radiator assembly to cool a coolant circulated through the prime mover via heat exchange with outside air, wherein a direction in which the vehicle body travels straight is a front-rear direction, the prime mover is provided forward of the material storage portion with an air passage chamber between the prime mover and the material storage portion, the air passage chamber being a chamber in which the outside air flows, and the radiator assembly is provided in the air passage chamber.

The working vehicle may include a cooling fan to blow the outside air from an area where the material storage portion is present toward the prime mover.

The working vehicle may include a cooling fan to blow the outside air to the prime mover. The radiator assembly may include a first air passage surface positioned to face the material storage portion, and a second air passage surface positioned to face the prime mover. The cooling fan may be adjacent to the second air passage surface.

The working vehicle may include an oil cooler to cool hydraulic fluid for at least one hydraulic device provided on the vehicle body via heat exchange with the outside air. The oil cooler may be provided in the air passage chamber.

The radiator assembly may include a first air passage surface positioned to face the material storage portion and a second air passage surface positioned to face the prime mover. The oil cooler may be adjacent to the first air passage surface.

The working vehicle may include a cooling fan to blow the outside air to the prime mover. The cooling fan may be adjacent to the second air passage surface.

The working vehicle may include a travel pump to be driven by the prime mover to deliver hydraulic fluid, and a travel motor to drive the traveling device by the hydraulic fluid delivered by the travel pump. The travel pump may be forward of and adjacent to the prime mover.

The working vehicle may include an exhauster to guide air discharged from the prime mover to an outside of the working vehicle. the exhauster may be forward of and adjacent to the prime mover.

The working vehicle may include an air cleaner to clean air to be supplied to the prime mover. The air cleaner may be provided in the air passage chamber.

The working vehicle may include a spreader to spread a liquid chemical to a surrounding area of the vehicle body. The material storage portion may be a liquid chemical tank to store the liquid chemical.

The working vehicle may include a spreading pump to cause the spreader to spread the liquid chemical, and a spreading motor to provide rotation power to the spreader. The spreading pump and the spreading motor may be downward of the radiator assembly in the air passage chamber.

The working vehicle may include a hood to cover the prime mover, and a body cover to cover the material storage portion. An air intake opening in communication with the air passage chamber may be defined between a facing end portion of the hood and a facing end portion of the body cover that face each other.

At least a portion of the air intake opening may be rearward of the air passage chamber.

The facing end portion of the body cover may extend toward an interior of the hood.

### Advantageous Effects of Invention

With the above-described working vehicle, since it is possible to reduce the thermal load on the material storage portion and reduce the size of the vehicle body, maneuverability improves.

### Brief Description of Drawings

[FIG. 1] FIG. 1 is a perspective view of a working vehicle of the present invention.
[FIG. 2] FIG. 2 is a left side view of a working vehicle of the present invention.
[FIG. 3] FIG. 3 is a top view of a working vehicle of the present invention.
[FIG. 4] FIG. 4 is a front view of a working vehicle of the present invention.
[FIG. 5] FIG. 5 is a left side view schematically illustrating an internal configuration of a working vehicle of the present invention.
[FIG. 6] FIG. 6 is a top view schematically illustrating an internal configuration of a working vehicle of the present invention.
[FIG. 7] FIG. 7 is a block diagram illustrating an internal configuration of a working vehicle of the present invention.
[FIG. 8] FIG. 8 is a rear perspective view of a radiator assembly and its surroundings.
[FIG. 9] FIG. 9 illustrates a path of a working vehicle of the present invention turning while traveling.
[FIG. 10] FIG. 10 schematically illustrates an adjuster.
[FIG. 11] FIG. 11 is a schematic block diagram of a controller.
[FIG. 12] FIG. 12 illustrates an example of a planned travel route.
[FIG. 13A] FIG. 13A illustrates an example of a connection path of a planned travel route.
[FIG. 13B] FIG. 13B illustrates another example of a connection path of a planned travel route.
[FIG. 13C] FIG. 13C illustrates another example of a connection path of a planned travel route.
[FIG. 13D] FIG. 13D illustrates another example of a connection path of a planned travel route.
[FIG. 14] FIG. 14 is a bottom perspective view of a bumper assembly and its surroundings.
[FIG. 15] FIG. 15 is a left side view of a bumper assembly and its surroundings.
[FIG. 16] FIG. 16 is a left side view illustrating a variation of a working vehicle of the present invention.
[FIG. 17] FIG. 17 is a top view illustrating a variation of a working vehicle of the present invention.
[FIG. 18] FIG. 18 schematically illustrates a variation of an adjuster.

### Description of Embodiments

The following discusses example embodiments of the present invention with reference to drawings.

A working vehicle 1 of the present example embodiment is a liquid chemical spreading vehicle used to spread a liquid chemical in an agricultural field such as a farm or an orchard. The working vehicle 1 of the present example embodiment is a kind of autonomous traveling work vehicle having both a remote control (operation) function in which the vehicle is manually caused to travel using a remote control (remote manual operator, or remote operating device) RC, and an autonomous travel function in which the vehicle autonomously travels based on position information relating to the working vehicle 1, obstacle detection information and the like. It is noted that the working vehicle 1 according to the present invention is not limited to the liquid chemical spreading vehicle. For example, the working vehicle 1 according to the present invention may be an agricultural machine, a construction machine, a carrier machine, a utility vehicle, or the like, including a material storage portion to store a work material other than a liquid chemical.

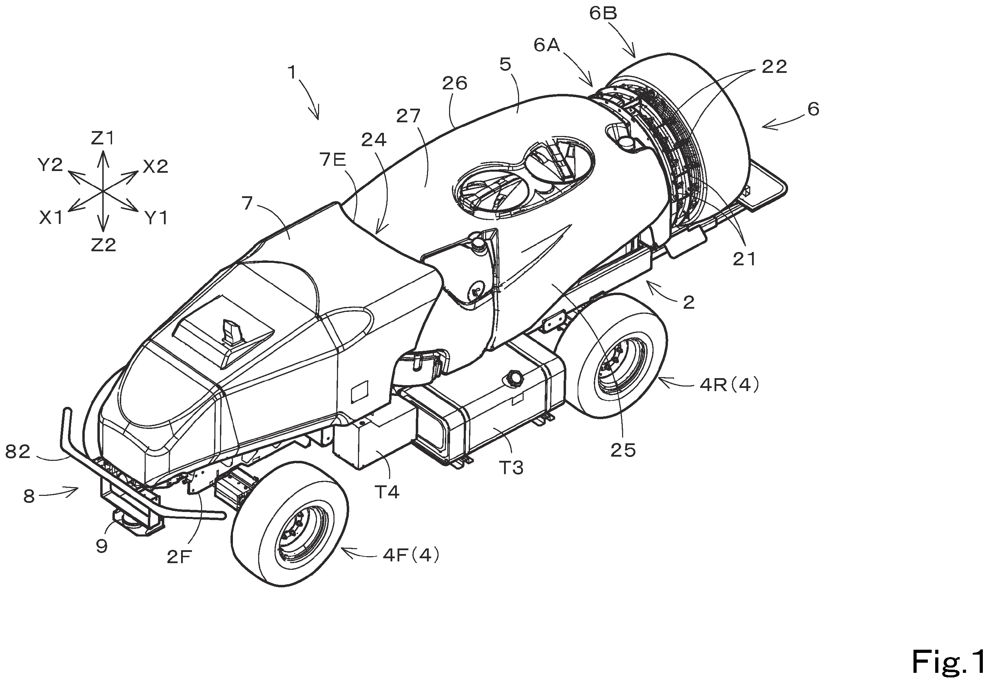

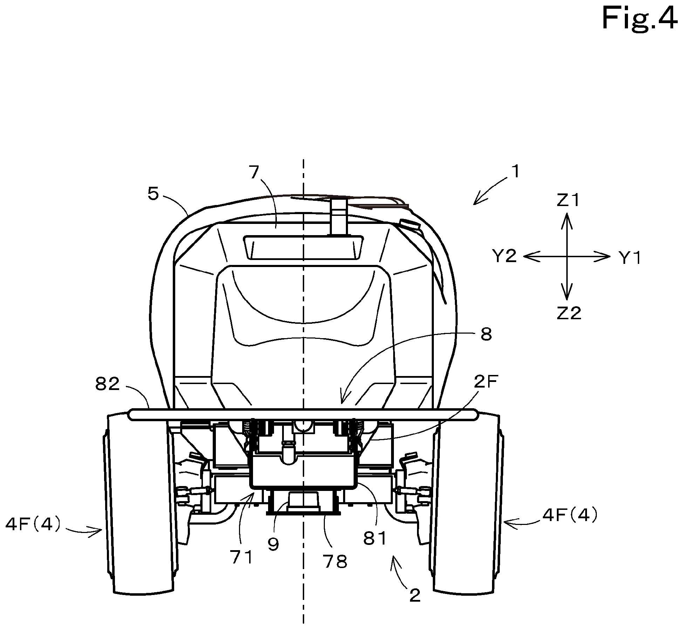

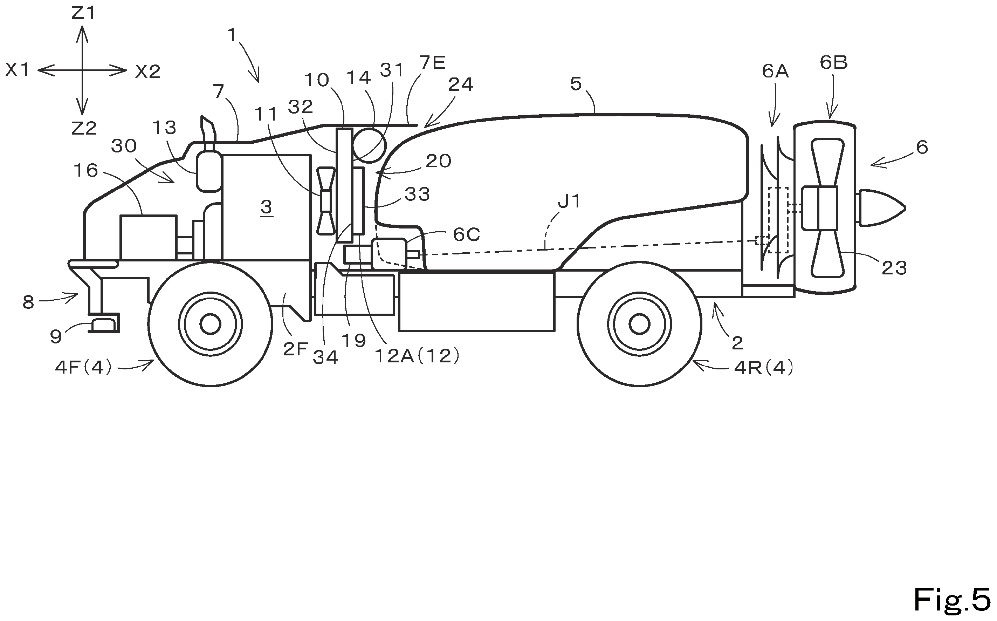

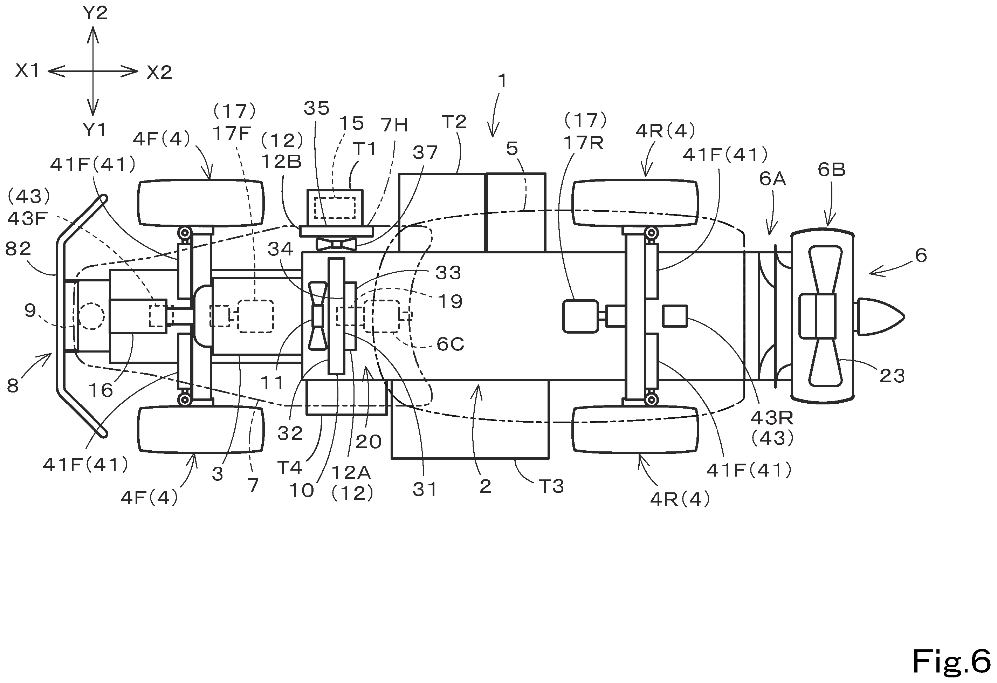

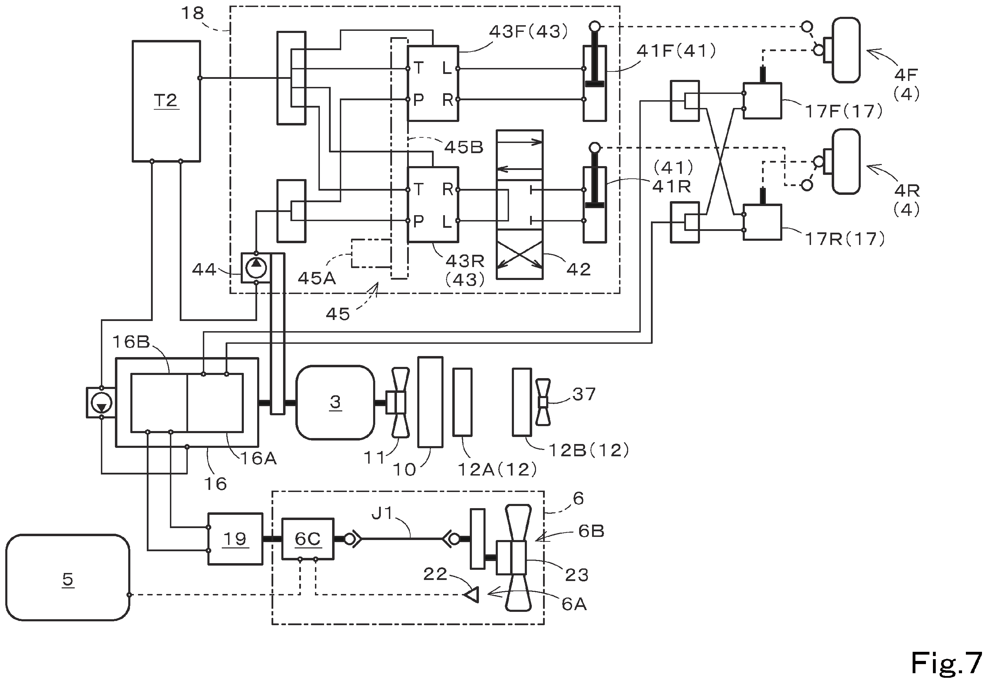

As shown in FIGS. 1 to 6, the working vehicle 1 of the present example embodiment includes a vehicle body 2, a prime mover 3, a traveling device 4, a liquid chemical tank 5 as a material storage portion, a spreader 6 as a working device, a hood 7, a bumper assembly 8, and an object sensor 9. As shown in FIGS. 5 and 6, the working vehicle 1 includes a radiator assembly 10, a cooling fan 11, oil cooler(s) 12, an exhauster 13, an air cleaner 14, and a controller 15. Furthermore, as shown in FIG. 7, the working vehicle 1 includes a pump assembly 16, travel motor(s) 17, a steering system 18, and a spreading motor 19.

In the following description, a length direction which is a direction in which the vehicle body 2 travels straight (indicated by arrows X1, X2 in FIGS. 1 to 3) is referred to as a front-rear direction, a width direction of the vehicle body 2 (indicated by arrows Y1, Y2 in FIGS. 1, 3, and 4) is referred to as a left-right direction, and a height direction of the vehicle body 2 (indicated by arrows Z1, Z2 in FIGS. 1, 2, and 4) is referred to as an up-down direction.

The vehicle body 2 includes an assembly of metal plates and the like. As shown in FIGS. 1 to 3, the vehicle body 2 includes a vehicle body frame 2F. The vehicle body frame 2F includes a frame structure elongated in the front-rear direction, and supports heavy elements such as the prime mover 3, the liquid chemical tank 5, and the spreader 6 such that these elements are arranged in the front-rear direction.

As shown in FIG. 6, the vehicle body frame 2F is provided with a control box T1 and an oil tank T2 on the right side of the vehicle body frame 2F. The controller 15 is stored in the control box T1. The configuration of the controller 15 will be detailed later.

The vehicle body frame 2F is provided with a fuel tank T3 and a battery box T4 on the left side of the vehicle body frame 2F. The battery box T4 stores a secondary battery such as a lithium ion battery and/or a lead storage battery. The electricity stored in the battery is supplied to electric devices such as the cooling fan 11.

The prime mover 3 of the present example embodiment includes a diesel engine. It is noted that the prime mover 3 may include a hydrogen engine driven by energy from combustion of hydrogen gas, and/or an electric motor driven by electricity generated by a fuel cell or electricity in the battery from an external source.

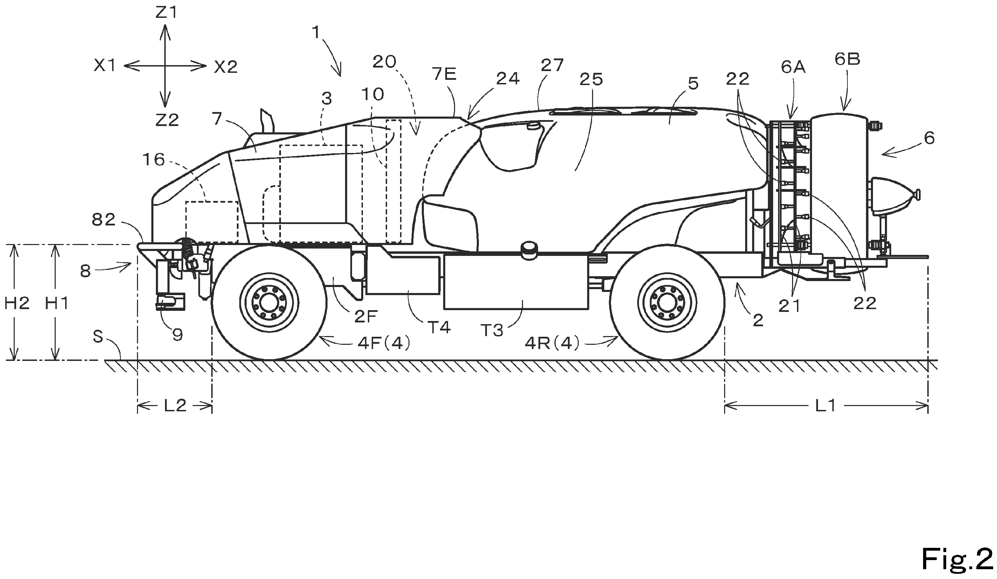

As shown in FIGS. 2, 3, 5, and 6, the prime mover 3 is provided at a front portion of the vehicle body 2. The prime mover 3 is supported at a position forward of the center in the front-rear direction of an upper portion of the vehicle body frame 2F. The prime mover 3 is covered by the hood 7. That is, the prime mover 3 is stored in the hood 7. The prime mover 3 includes a driving shaft at a front portion thereof.

The traveling device 4 supports the vehicle body 2 such that the vehicle body 2 is allowed to travel. As shown in FIGS. 1 to 4, the traveling device 4 of the present example embodiment includes wheels provided at the vehicle body 2 and rotatable relative to the vehicle body 2, and includes a left and right pair of front wheels 4F provided at the front portion of the vehicle body 2, and a left and right pair of rear wheels 4R provided at a rear portion of the vehicle body 2.

The front wheels 4F are provided at a lower portion of the vehicle body frame 2F such that the front wheels 4F are below (or lower than) the prime mover 3. The rear wheels 4R are provided at the lower portion of the vehicle body frame 2F such that the rear wheels 4R are below (or lower than) the liquid chemical tank 5. It is noted that one of or both of the pair of front wheels 4F and the pair of rear wheels 4R of the traveling device 4 may be crawlers.

As shown in FIG. 6, rotation power is transmitted from the travel motors 17 to the front wheels 4F and to the rear wheels 4R independently. As shown in FIG. 7, the front wheels 4F and the rear wheels 4R are independently steered by steering cylinders 41 (described later). That is, the working vehicle 1 of the present example embodiment is a four-wheel-drive vehicle in which the front wheels 4F and the rear wheels 4R are driven independently, and a four-wheel-steering vehicle in which the front wheels 4F and the rear wheels 4R are steered independently. It is noted that the working vehicle 1 may be a two-wheel-drive vehicle which travels using, as driving wheels, only the pair of front wheels 4F or the pair of rear wheels 4R. The working vehicle 1 may be a two-wheel-steering vehicle which travels using, as steering wheels, only the pair of front wheels 4F or the pair of rear wheels 4R.

The liquid chemical tank 5 is a container to store a liquid chemical as a work material which is a material for work. The liquid chemical tank 5 of the present example embodiment is made from a fiber-reinforced resin material reinforced with carbon fiber and/or glass fiber. It is noted that the liquid chemical tank 5 may be made from a synthetic resin material other than the fiber-reinforced resin material, or may be made from a metal material such as stainless steel, provided that the material is highly heat resistant, highly impact resistant, and highly weather resistant.

As shown in FIGS. 1 to 3, the liquid chemical tank 5 is provided at the rear portion of the vehicle body 2. The liquid chemical tank 5 is supported at the upper portion of the vehicle body frame 2F such that the liquid chemical tank 5 is rearward of the prime mover 3. The liquid chemical tank 5 is in the form of a bullet elongated in the front-rear direction, and extends from the central portion of the vehicle body frame 2F in the front-rear direction to a rear end of the vehicle body frame 2F. As shown in FIGS. 5 and 6, an air passage chamber 20 to allow air outside the working vehicle 1 to flow therethrough is provided between the prime mover 3 and the liquid chemical tank 5. That is, the liquid chemical tank 5 is provided rearward of the prime mover 3, which is a heat generating element, with the air passage chamber 20 between the liquid chemical tank 5 and the prime mover 3. In other words, the prime mover 3 is provided forward of the liquid chemical tank 5 with the air passage chamber 20 between the prime mover 3 and the liquid chemical tank 5. With this, it is possible to significantly reduce the thermal influence on the liquid chemical tank 5.

The spreader 6 spreads a liquid chemical stored in the liquid chemical tank 5 to a surrounding area of the vehicle body 2. As shown in FIG. 5, the spreader 6 includes a jetting head 6A, an air blower 6B, and a spreading pump 6C. The jetting head 6A sprays the liquid chemical from the liquid chemical tank 5 outward. The air blower 6B blows outside air to the jetting head 6A. The spreading pump 6C supplies the liquid chemical from the liquid chemical tank 5 to the jetting head 6A and drives the air blower 6B.

As shown in FIG. 2, the spreader 6 is provided at the rear portion of the vehicle body 2 such that the spreader 6 is rearward of the rear wheels 4R. A distance (rear overhang) L1 between the rear wheels 4R and a rear end of a rear portion of the spreader 6 (air blower 6B) in the front-rear direction is greater than a distance (front overhang) L2 between the front wheels 4F and a front end of the front portion of the vehicle body 2 in the front-rear direction. That is, the working vehicle 1 of the present example embodiment is configured such that a rear overhang portion rearward of the rear wheels 4R of the vehicle body 2 is shorter than a front overhang portion forward of the front wheels 4F of the vehicle body 2. Therefore, when the working vehicle 1 turns while traveling, the travel of the working vehicle 1 is to be controlled so that the rear overhang portion does not contact an obstacle on the outside of the turn along a travel route (travel path).

As shown in FIGS. 1 to 3, the jetting head 6A is provided at the rear portion of the vehicle body 2. The jetting head 6A is supported at the upper portion of the vehicle body frame 2F such that the jetting head 6A is rearward of the liquid chemical tank 5. The jetting head 6A includes air guide plate(s) 21 and a plurality of spray nozzles 22. The air guide plate(s) 21 change(s) the direction of the flow of air blown from the air blower 6B to lateral directions and upward directions with respect to the vehicle body 2. Each of the spray nozzles 22 sprays a mist of the liquid chemical into an airstream changed in direction by the air guide plate(s) 21.

As shown in FIGS. 5 and 6, the air blower 6B is provided at the rear portion of the vehicle body 2. The air blower 6B is supported at the upper portion of the vehicle body frame 2F such that the air blower 6B is rearward of the jetting head 6A. The air blower 6B includes an air blowing fan 23. As shown in FIG. 5, the air blowing fan 23 has a driven shaft thereof connected to a driving shaft of the spreading pump 6C via a universal joint J1, and is driven by rotation power of the spreading pump 6C to blow air from an area rearward of the working vehicle 1 toward the jetting head 6A that is forward of the air blowing fan 23.

The spreading pump 6C is provided in a space lower than the radiator assembly 10 in the air passage chamber 20. The spreading pump 6C includes an inlet-side pipe connector connected to the liquid chemical tank 5 via a liquid inlet pipe, and a outlet-side pipe connector connected to the spray nozzles 22 via a liquid outlet pipe. The spreading pump 6C includes a driven shaft connected to a driving shaft of the spreading motor 19, and is driven by the rotation power of the spreading motor 19 to blow the liquid chemical from the liquid chemical tank 5 to the spray nozzles 22 under pressure and cause the air blowing fan 23 to rotate. With this, the liquid chemical in the liquid chemical tank 5 is spread leftward, rightward, and upward relative to the vehicle body 2.

The hood 7 is a cover body to cover the prime mover 3, and connected to and supported at an upper front portion of the vehicle body frame 2F. The hood 7 of the present example embodiment is made from (includes) a material more weather resistant than the liquid chemical tank 5. It is noted that the hood 7 may be made from a synthetic resin material or a metal material such as a steel sheet and/or a stainless plate, provided that the material is highly heat resistant, highly impact resistant, and highly weather resistant.

The hood 7 is sized to cover a region of the vehicle body 2 that is in front of the liquid chemical tank 5. That is, as shown in FIGS. 5 and 6, the hood 7 covers the radiator assembly 10, the cooling fan 11, the oil cooler(s) 12, the exhauster 13, the air cleaner 14, the pump assembly 16, and the like as well as the prime mover 3 provided at the front portion of the vehicle body 2. It is noted that the hood 7 may be connected to the vehicle body frame 2F via a drive device such as hydraulic cylinder(s) and/or electric motor(s), and configured to automatically open and close according to an instruction from the controller 15.

As shown in FIGS. 1 to 3, the hood 7 is in the form of a bullet extending forward from a front portion of the liquid chemical tank 5. As shown in FIGS. 2, 3, and 5, the hood 7 is positioned outward of the liquid chemical tank 5 such that a rear end portion 7E thereof partially overlaps a front portion of the liquid chemical tank 5. A gap 24 in communication with the air passage chamber 20 is defined between the rear end portion 7E of the hood 7 and the front portion of the liquid chemical tank 5. The gap 24 is provided along the rear end portion 7E of the hood 7, and in communication with the air passage chamber 20. That is, the gap 24 has an opening facing rearward. Thus, the gap 24 functions as an air inlet to allow outside air to enter the air passage chamber 20.

As shown in FIGS. 1 to 3, a left side surface portion 25 of the hood 7 and a right side surface portion 26 of the hood 7 are configured such that the width of the hood 7 increases with increasing distance from the front end of the hood 7 and with decreasing distance to the rear end of the hood 7. An upper surface portion 27 of the hood 7 extends diagonally upward from the front end toward the rear end thereof. Therefore, when the working vehicle 1 travels between trees in an orchard or the like, even if branches, leaves or the like come into contact with the hood 7 from the front, they can be smoothly deflected outward and rearward with respect to the vehicle body 2 along the left side surface portion 25, the right side surface portion 26, and/or the upper surface portion 27.

The bumper assembly 8 is a protector to protect the vehicle body 2 from a collision with an obstacle or the like, and projects from the front portion of the vehicle body 2. The bumper assembly 8 also functions as a contact detector to detect a contact of the working vehicle 1 with an obstacle during the travel. The detailed configuration of the bumper assembly 8 will be described later.

The object sensor 9 detects objects in the surrounding area of the vehicle body 2. The object sensor 9 of the present example embodiment is a sensing assembly (light detection and ranging sensor, or LiDAR sensor) to apply laser light to the surrounding area and measure the distance to an object and the position of the object based on information about the detection of the reflected light. As shown in FIGS. 1 to 5, the object sensor 9 is provided at a lower portion of the bumper assembly 8. The detailed arrangement of the object sensor 9 will be described later. It is noted that, provided that the object sensor 9 is configured to accurately detect an object in the surrounding area of the vehicle body 2 during travel, the object sensor 9 may be a millimeter wave radar to emit radio waves to the surrounding area and measure the distance to an object and the position of the object based on information about the detection of the reflected waves, or may be a camera sensor to recognize the distance to an object and the position of the object based on information about an image captured by a camera.

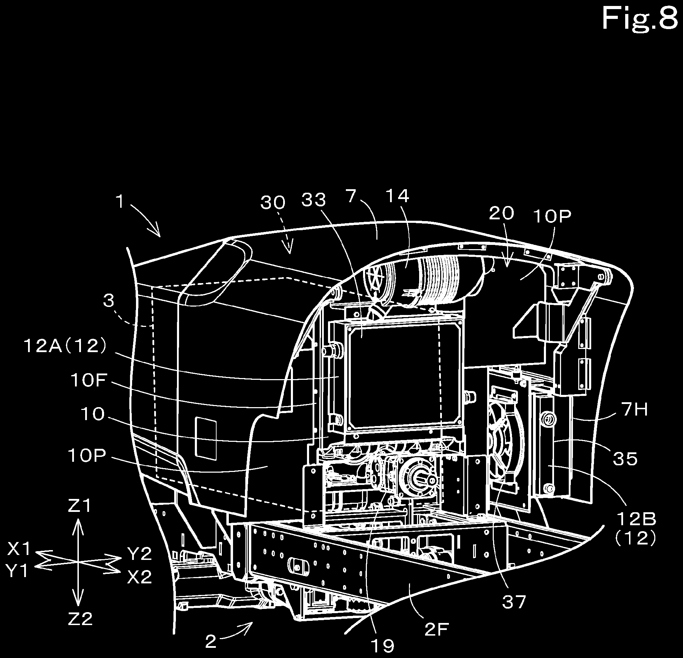

The radiator assembly 10 is a cooler to cool a coolant circulated through the prime mover 3 via heat exchange with outside air. As shown in FIGS. 5 and 6, the radiator assembly 10 is provided at the front portion of the vehicle body 2. As shown in FIG. 8, a support frame 10F, which is a mount for the radiator assembly 10, extends upward from the upper portion of the vehicle body frame 2F such that the support frame 10F is rearward of the prime mover 3. The radiator assembly 10 is connected to and supported by the support frame 10F. Partition walls 10P are provided at left and right sides of the support frame 10F. The partition walls 10P separate a space forward of the radiator assembly 10 inside the hood 7, i.e., a prime mover room 30 housing the prime mover 3, from the air passage chamber 20.

As shown in FIGS. 5 and 6, the radiator assembly 10 includes a first air passage surface 31 positioned to face the liquid chemical tank 5, and a second air passage surface 32 positioned to face the prime mover 3. The radiator assembly 10 is provided in the air passage chamber 20 such that the first air passage surface 31 is oriented toward the liquid chemical tank 5 (rearward) and the second air passage surface 32 is oriented toward the prime mover 3 (forward).

The cooling fan 11 is driven by rotation power of the prime mover 3 to blow outside air to the prime mover 3. The cooling fan 11 is provided at the front portion of the vehicle body 2. The cooling fan 11 is adjacent to the second air passage surface 32 (one of the air passage surfaces that is closer to the prime mover 3 than the other) of the radiator assembly 10 in the air passage chamber 20. Therefore, when the cooling fan 11 is actuated, air outside the working vehicle 1 enters the air passage chamber 20 through the gap 24 at the rear end portion 7E of the hood 7, and blown to the prime mover 3 through the radiator assembly 10. With this, the cooling of the prime mover 3 is promoted.

Each oil cooler 12 is a cooler to cool hydraulic fluid for hydraulic device(s) provided in or on the vehicle body 2 via heat exchange with outside air. The oil coolers 12 are provided at the front portion of the vehicle body 2. As shown in FIGS. 6 and 8, the oil coolers 12 include a first oil cooler 12A and a second oil cooler 12B.

As shown in FIGS. 5 and 6, the first oil cooler 12A is adjacent to the first air passage surface 31 of the radiator assembly 10. The first oil cooler 12A includes a first air passage surface 33 positioned to face the liquid chemical tank 5, and a second air passage surface 34 positioned to face the radiator assembly 10. The first oil cooler 12A is positioned in the air passage chamber 20 such that the first air passage surface 33 is oriented toward the liquid chemical tank 5 (rearward), and the second air passage surface 34 faces the first air passage surface 31 of the radiator assembly 10. Therefore, the outside air introduced into the air passage chamber 20 by the cooling fan 11 is guided to the radiator assembly 10 after passing through the first oil cooler 12A.

As shown in FIGS. 6 and 8, the second oil cooler 12B is rightward of the radiator assembly 10. The second oil cooler 12B includes a first air passage surface 35 positioned to face an air inlet 7H in the right side surface portion 26 of the hood 7, and a second air passage surface 36 positioned to face an inner space of the hood 7. The second oil cooler 12B is positioned in the air passage chamber 20 such that the first air passage surface 35 faces the air inlet 7H and the second air passage surface 36 is oriented toward the center of the hood 7 in the left-right direction (oriented leftward).

The second oil cooler 12B includes an air supply fan 37. The air supply fan 37 is provided at the second air passage surface 36 (one of the air passage surfaces that is closer to the radiator assembly 10 than the other) of the second oil cooler 12B. Therefore, when the air supply fan 37 is actuated, air outside the working vehicle 1 enters the air passage chamber 20 through the air inlet 7H and through the second oil cooler 12B.

The exhauster 13 is a muffler assembly (including a muffler, exhaust, etc.) to allow exhaust combustion gas from the prime mover 3 to flow out of the working vehicle 1. The exhauster 13 includes a filer to remove particulate matter (PM) contained in the exhaust combustion gas. As shown in FIGS. 5 and 6, the exhauster 13 is provided at the front portion of the vehicle body 2. The exhauster 13 is forward of and adjacent to the prime mover 3 in the hood 7. The exhauster 13 is connected to and supported by the upper front portion of the prime mover 3.

It is noted that the exhauster 13 may include, as the above-described filter, a catalyst-carrying filter to clean components such as hydrocarbon (HC), carbon monoxide (CO), and nitrogen oxides (NOx) contained in the exhaust combustion gas, in addition to removing the particulate matter. In the case where the prime mover 3 is an electric motor, the working vehicle 1 may include, instead of the exhauster 13, a heat exhauster to forcibly discharge heat generated by the electric motor to the outside.

The air cleaner 14 is a filter apparatus to remove dust and the like from air entering the prime mover 3. The air cleaner 14 is provided at the front portion of the vehicle body 2. The air cleaner 14 is rearward of an upper portion of the radiator assembly 10 in the air passage chamber 20.

The pump assembly 16 is a hydrostatic continuously variable transmission (HST pump) driven by rotation power of the prime mover 3 to deliver hydraulic fluid to the travel motor(s) 17 and the spreading motor 19. As shown in FIG. 7, the pump assembly 16 includes a first pump portion 16A as a travel pump to deliver the hydraulic fluid to the travel motor(s) 17, and a second pump portion 16B as a work pump to deliver the hydraulic fluid to the spreading motor 19.

The first pump portion 16A and the second pump portion 16B are, for example, swash-plate variable displacement axial pumps. The first pump portion 16A and the second pump portion 16B each include pressure receiver(s) to change the angle of a swash plate in response to an applied pilot pressure. The first pump portion 16A and the second pump portion 16B are each configured to change the delivery amount (output) and the like of the hydraulic fluid in response to a change in the angle of the swash plate. The controller 15 changes the pilot pressure acting on the pressure receiver(s) of the first pump portion 16A to adjust the output and fluid delivery direction of the first pump portion 16A, thus adjusting the rotation speed and rotation direction (direction for forward travel, direction for rearward travel) of the travel motor(s) 17. Furthermore, the controller 15 changes the pilot pressure acting on the pressure receiver(s) of the second pump portion 16B to adjust the output of the second pump portion 16B to adjust the rotation speed of the spreading motor 19.

As shown in FIGS. 5 and 6, the pump assembly 16 is provided at the front portion of the vehicle body 2. The pump assembly 16 is supported at the upper portion of the vehicle body frame 2F such that the pump assembly 16 is forward of the center of the vehicle body frame 2F in the front-rear direction. The pump assembly 16 is forward of and adjacent to the prime mover 3 in the hood 7. The pump assembly 16 includes a driven shaft connected to a driving shaft provided at the front portion of the prime mover 3, and is driven by rotation power of the prime mover 3.

Each travel motor 17 is a hydraulic motor to drive the traveling device 4 by hydraulic pressure. As shown in FIG. 6, the travel motors 17 include a front wheel travel motor 17F and a rear wheel travel motor 17R. The front wheel travel motor 17F is provided at the lower portion of the vehicle body frame 2F such that the front wheel travel motor 17F is forward of the center of the vehicle body frame 2F in the front-rear direction. The rear wheel travel motor 17R is provided at the lower portion of the vehicle body frame 2F such that the rear wheel travel motor 17R is rearward of the center of the vehicle body frame 2F in the front-rear direction.

The steering system 18 is configured to adjust the steering angle of the traveling device 4. As shown in FIG. 7, the steering system 18 includes steering cylinder(s) 41, a steering switching valve 42, steering valve apparatus(es) 43, a steering pump 44, and an adjuster 45.

Each steering cylinder 41 is a hydraulic cylinder to steer the traveling device 4 by hydraulic pressure. The steering cylinders 41 include a front wheel steering cylinder 41F and a rear wheel steering cylinder 41R. As shown in FIG. 6, the front wheel steering cylinder 41F is provided at the lower portion of the vehicle body frame 2F such that the front wheel steering cylinder 41F is forward of the center of the vehicle body frame 2F in the front-rear direction. The rear wheel steering cylinder 41R is provided at the lower portion of the vehicle body frame 2F such that the rear wheel steering cylinder 41R is rearward of the center of the vehicle body frame 2F in the front-rear direction.

The steering switching valve 42 is a direction switching valve to switch the direction of flow of the hydraulic fluid with respect to the rear wheel steering cylinder 41R. Specifically, the steering switching valve 42 is a switching valve configured to switch between three output positions including (i) a counter-phase steering position (first position) in which counter-phase steering is achieved by the rear wheel steering cylinder 41R and the front wheel steering cylinder 41F, (ii) an in-phase steering position (second position) in which in-phase steering is achieved by the rear wheel steering cylinder 41R and the front wheel steering cylinder 41F, and (iii) a two-wheel-steering position (third position) in which the steering performed by the rear wheel steering cylinder 41R is restricted. The steering switching valve 42 includes a flowrate adjuster mechanism configured to adjust hydraulic fluid output to the rear wheel steering cylinder 41R when in the in-phase steering position. The steering switching valve 42 is provided at the lower portion of the vehicle body frame 2F such that the steering switching valve 42 is rearward of the center of the vehicle body frame 2F in the front-rear direction.

Each steering valve apparatus 43 is a pressure control valve (fully hydraulic power steering system) to control the hydraulic pressure of the corresponding steering cylinder 41. The steering valve apparatuses 43 include a front wheel steering valve apparatus 43F and a rear wheel steering valve apparatus 43R.

The front wheel steering valve apparatus 43F adjusts the hydraulic pressure of the front wheel steering cylinder 41F. That is, the front wheel steering valve apparatus 43F adjusts the pressure of the hydraulic fluid supplied from the steering pump 44 to adjust the steering angle of the front wheels 4F. The rear wheel steering valve apparatus 43R adjusts the hydraulic pressure of the rear wheel steering cylinder 41R. That is, the rear wheel steering valve apparatus 43R adjusts the pressure of the hydraulic fluid supplied from the steering pump 44 to adjust the steering angle of the rear wheels 4R.

The steering pump 44 is a hydraulic pump to be driven by rotation power of the prime mover 3 to deliver hydraulic fluid to the steering valve apparatuses 43. The steering pump 44 is provided at the front portion of the vehicle body 2. The steering pump 44 is provided at a right portion of an area forward of the prime mover 3 (provided rightward of the pump assembly 16) on the vehicle body frame 2F.

The adjuster 45 adjusts the hydraulic pressure output from the front wheel steering valve apparatus 43F and the hydraulic pressure output from the rear wheel steering valve apparatus 43R. The adjuster 45 is provided at the lower front portion of the vehicle body 2. The adjuster 45 is provided at the lower portion of the vehicle body frame 2F such that the adjuster 45 is leftward of the control box T1 (closer to the center of the vehicle body 2 in the left-right direction than the control box T1 is to the center).

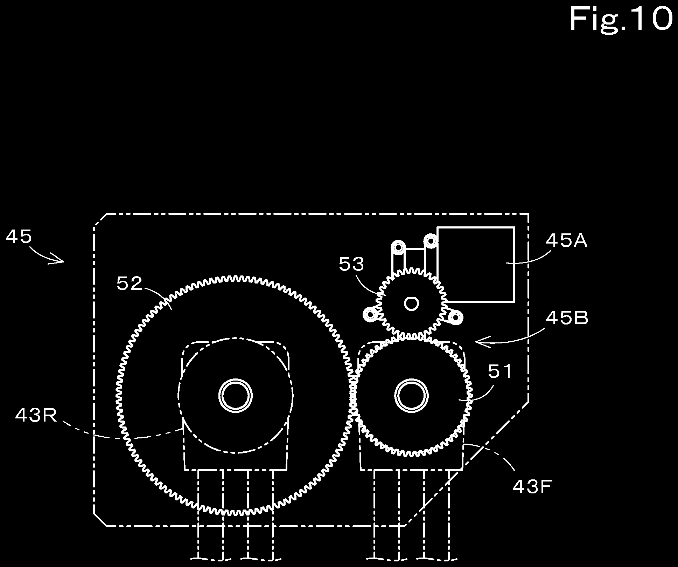

As shown in FIG. 10, the adjuster 45 of the present example embodiment includes a steering motor 45A and a gear assembly 45B. The steering motor 45A is an electric motor to be driven by electricity to rotate. The gear assembly 45B transmits the rotation power of the steering motor 45A to an input shaft of the front wheel steering valve apparatus 43F and an input shaft of the rear wheel steering valve apparatus 43R with different rotation speeds (in other words, at a ratio of different rotation speeds, or with different rotation speed proportions).

The gear assembly 45B includes a front wheel gear 51, a rear wheel gear 52, and a pinion gear 53. The front wheel gear 51 is connected to the input shaft of the front wheel steering valve apparatus 43F. The rear wheel gear 52 is connected to the input shaft of the rear wheel steering valve apparatus 43R. The pinion gear 53 is connected to a driving shaft of the steering motor 45A.

The front wheel gear 51, the rear wheel gear 52, and the pinion gear 53 are spur gears. The rear wheel gear 52 engages the front wheel gear 51. The front wheel gear 51 engages the pinion gear 53. Therefore, when the steering motor 45A is driven, both the front wheel gear 51 and the rear wheel gear 52 rotate, driving the front wheel steering valve apparatus 43F and the rear wheel steering valve apparatus 43R concurrently.

The ratio of rotations of the front wheel gear 51 and the rear wheel gear 52 is, for example, 2/1. That is, the adjuster 45 of the present example embodiment is configured such that, when a single steering motor 45A is driven, the front wheel gear 51 rotates twice as fast as the rear wheel gear 52.

As described above, when the steering motor 45A is driven, the hydraulic pressure output from the front wheel steering valve apparatus 43F is higher than the hydraulic pressure output from the rear wheel steering valve apparatus 43R, and the front wheel steering cylinder 41F is driven to a greater extent than the rear wheel steering cylinder 41R. It follows that the steering angle of the front wheels 4F is as twice or substantially twice as large as the steering angle of the rear wheels 4R. It is noted that the ratio of the rotations of the front wheel gear 51 and the rear wheel gear 52 is not limited to 2/1, provided that the ratio is defined such that at least the hydraulic pressure output from the front wheel steering valve apparatus 43F is higher than the hydraulic pressure output from the rear wheel steering valve apparatus 43R.

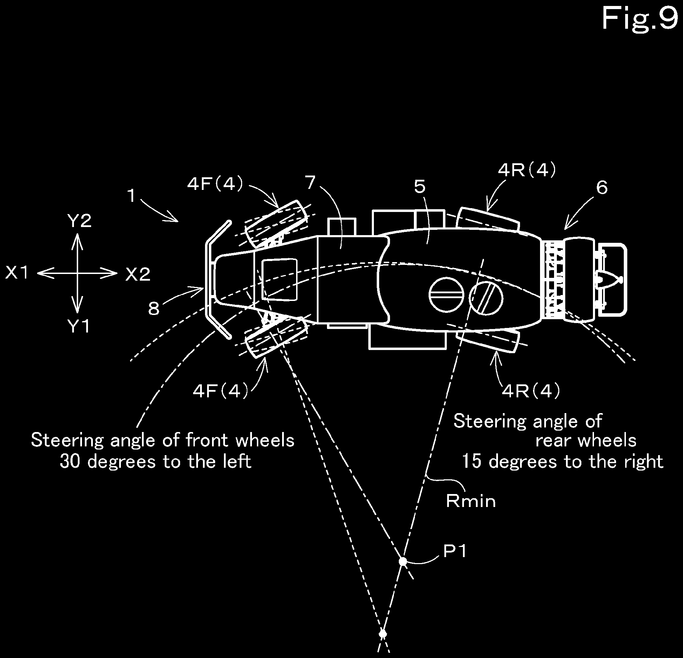

As described above, when the steering system 18 causes the working vehicle 1 to turn while traveling by steering the front wheels 4F and the rear wheels 4R by the counter-phase steering (i.e., in opposite phase, or in different directions) (4WS mode), the steering system 18 causes the hydraulic pressure output from the front wheel steering valve apparatus 43F to be higher than the hydraulic pressure output from the rear wheel steering valve apparatus 43R such that the steering angle of the front wheels 4F is greater than the steering angle of the rear wheels 4R. With this, as shown in FIG. 9, it is possible to reduce the turning radius of the working vehicle 1 compared to when the steering angle of the front wheels 4F is smaller than or equal to the steering angle of the rear wheels 4R (the front wheels 4F represented by dash lines in FIG. 9 indicate that the steering angle of the front wheels 4F is equal to or substantially equal to the steering angle of the rear wheels 4R). Furthermore, as the steering angle of the front wheels 4F becomes further greater than the steering angle of the rear wheels 4R, a turning center Q1 of the working vehicle 1 is displaced toward the rear of the working vehicle 1 (toward the spreader 6).

When the steering system 18 causes the working vehicle 1 to travel by steering the front wheels 4F and the rear wheels 4R by the in-phase steering (i.e., in phase or in the same direction) (crab mode), the steering system 18 causes the hydraulic pressure output from the front wheel steering valve apparatus 43F to be the same as the hydraulic pressure output from the rear wheel steering valve apparatus 43R such that the steering angle of the front wheels 4F is the same as the steering angle of the rear wheels 4R. It is noted that, when the steering motor 45A is driven, similar to the case where the front wheels 4F and the rear wheels 4R are steered by the counter-phase steering, the hydraulic pressure output from the front wheel steering valve apparatus 43F is higher than the hydraulic pressure output from the rear wheel steering valve apparatus 43R. Therefore, the working vehicle 1 of the present example embodiment adjusts the hydraulic pressure output to the rear wheel steering cylinder 41R via the flowrate adjuster of the steering switching valve 42 such that the operation stroke of the front wheel steering cylinder 41F is adjusted to be the same as the operation stroke of the rear wheel steering cylinder 41R.

The spreading motor 19 is a hydraulic motor to provide rotation power to the spreader 6 by hydraulic pressure. As shown in FIG. 5, the spreading motor 19 and the spreading pump 6C are located lower than the radiator assembly 10 in the air passage chamber 20 such that the spreading motor 19 and the spreading pump 6C are arranged in the front-rear direction. The spreading motor 19 has the driving shaft connected to the driven shaft of the spreading pump 6C and is configured to drive the spreading pump 6C by the rotation power.

As described above, in the working vehicle 1 of the present example embodiment, since, in addition to the prime mover 3, the exhauster 13 also becomes hot because of the exhaust combustion gas from the prime mover 3, these high-temperature elements are provided in the prime mover room 30. On the other hand, components such as the spreading pump 6C, the spreading motor 19, the radiator assembly 10, the cooling fan 11, the oil cooler 12, and the air cleaner 14 are provided in the air passage chamber 20 in consideration of cooling performance. In the working vehicle 1 of the present example embodiment, in consideration of cooling performance, the oil cooler 12 includes a plurality of oil coolers (first oil cooler 12A, second oil cooler 12B) which are provided at different positions.

### Circuit configuration of hydraulic device

As shown in FIG. 7, the pump assembly 16 includes input/output ports to allow the hydraulic fluid to be supplied to two paths. The travel motors 17 are connected to an input/output port of the first pump portion 16A via hydraulic fluid pipe(s), and the spreading motor 19 is connected to an input/output port of the second pump portion 16B via hydraulic fluid pipe(s).

Specifically, the hydraulic fluid pipe connected to the input/output port of the first pump portion 16A is branched at an intermediate portion thereof, and connected to the front wheel travel motor 17F and the rear wheel travel motor 17R. Therefore, the hydraulic fluid delivered by a single first pump portion 16A is distributed to the front wheel travel motor 17F and the rear wheel travel motor 17R. In other words, the front wheel travel motor 17F and the rear wheel travel motor 17R are driven by the hydraulic fluid supplied from a common first pump portion 16A. Thus, the hydraulic fluid from the first pump portion 16A is appropriately distributed to the front wheel travel motor 17F and the rear wheel travel motor 17R according to loads on the front wheel travel motor 17F and the rear wheel travel motor 17R.

The front wheel steering cylinder 41F is connected to the front wheel steering valve apparatus 43F via hydraulic fluid pipe(s). The rear wheel steering cylinder 41R is connected to the steering switching valve 42 via hydraulic fluid pipe(s). The steering switching valve 42 is connected to the rear wheel steering valve apparatus 43R via hydraulic fluid pipe(s).

The front wheel steering valve apparatus 43F and the rear wheel steering valve apparatus 43R are each connected to the steering pump 44 and the oil tank T2 via hydraulic fluid pipe(s). The steering pump 44 is connected to the oil tank T2 via hydraulic fluid pipe(s). That is, the steering pump 44 circulates the hydraulic fluid between the oil tank T2 and the steering valve apparatuses 43.

### Controller

The controller 15 is a processing circuit including one or more processors. The controller 15 is configured or programmed to control the working vehicle 1, and perform various controls relating to the working vehicle 1. The controller 15 is connected to a plurality of devices provided in or on the working vehicle 1 communicably via in-vehicle network(s) such as CAN, ISOBUS, LIN, and/or FlexRay.

The controller 15 includes one or more memories, analog circuits, digital circuits, and/or the like. The one or more memories store(s) (record(s)) software program(s) to be executed by the one or more processors, various data and the like. The controller 15 is configured or programmed to, with the one or more processors, read the software program(s) from the one or more memories, and perform various processes based on the software program(s). It is noted that the controller 15 may be configured or programmed to, with the one or more processors, perform various processes based on predetermined logical circuit(s).

Examples of the processors include a central processing unit (CPU), a graphics processing unit (GPU), a digital signal processor (DSP), a field programmable gate array (FPGA), and an application specific integrated circuit (ASIC).

It is noted that the controller 15 may be configured to perform various processes by a plurality of physically separated processors cooperating with each other, and the configuration thereof is not limited to the above-described configuration. In this case, the plurality of processors are provided in one or more computers physically separated from the working vehicle 1, and the plurality of processors are communicably connected to each other via network(s) such as the in-vehicle network(s), LAN, WAN, and/or the Internet. The software program may be stored in a storage medium (nonvolatile memory such as HDD, SSD, CD-ROM, DVD-ROM) communicably connected to the controller 15 or an external server connected via the above-described network(s), and installed on the above-described memories from the storage medium or the server.

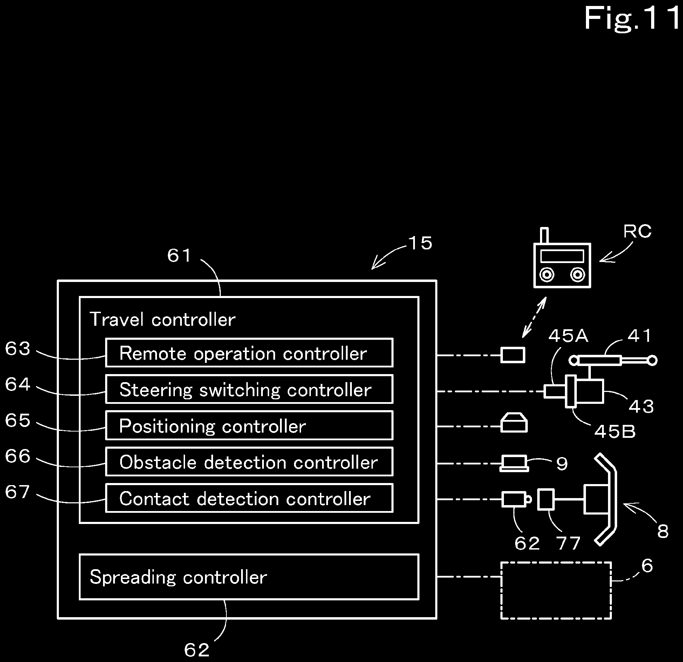

As shown in FIG. 11, the controller 15 includes a travel controller 61 and a spreading controller 62. The travel controller 61 and the spreading controller 62 are, for example, software programs installed on the controller 15.

The travel controller 61 controls traveling operations of the working vehicle 1 such as forward travel, rearward travel, turn, and stop. The spreading controller 62 controls a spreading operation that the spreader 6 spreads a liquid chemical. It is noted that, although the controller 15 of the present example embodiment is configured or programmed to, when the spreading operation of the liquid chemical is performed, drive the spreading motor 19 at a constant rotation speed, the controller 15 may be configured or programmed to adjust the rotation speed of the spreading motor 19 according to the operating environment, operating period, current position, and/or the like.

The travel controller 61 includes a remote operation controller 63, a steering switching controller 64, a positioning controller 65, an obstacle detection controller 66, and a contact detection controller 67. The remote operation controller 63 acquires operation information relating to a remote operating device (remote manual operator, or remote control) RC, and determines various actions of the working vehicle 1 based on the operation information.

The steering switching controller 64 selectively switches the steering mode of the working vehicle 1, according to the settings of the remote operation controller 63, between three modes including a 4WS mode to steer the rear wheels 4R and the front wheels 4F by the counter-phase steering, a 2WS mode to steer only the front wheels 4F, and a crab mode to steer the rear wheels 4R and the front wheels 4F by the in-phase steering.

The positioning controller 65 defines a travel route for the working vehicle 1 (in other words, causes the working vehicle 1 to autonomously travel) by comparing position information of the working vehicle 1 and map information of an agricultural field input in advance, and defining the traveling actions of the working vehicle 1 such as forward travel, rearward travel, turn, and stop. The position information of the working vehicle 1 is measured position information such as data represented by latitude and longitude or data represented by coordinates (X axis, Y axis). The map information of the agricultural field includes a map M of the agricultural field (agricultural field map), a planned travel route N defined, for example, in advance and used to perform automatic travel, and position information relating to trees and crops such as fruit trees in the agricultural field. The position information of the working vehicle 1 and the map information of the agricultural field are data represented by latitude and longitude, data represented by coordinates (X axis, Y axis), or the like. Thus, the positioning controller 65 defines the travel route for the working vehicle 1 such that the working vehicle 1 travels along the planned travel route N (such that the position deviation and/or the direction deviation of the vehicle body 2 from the planned travel route N is/are zero).

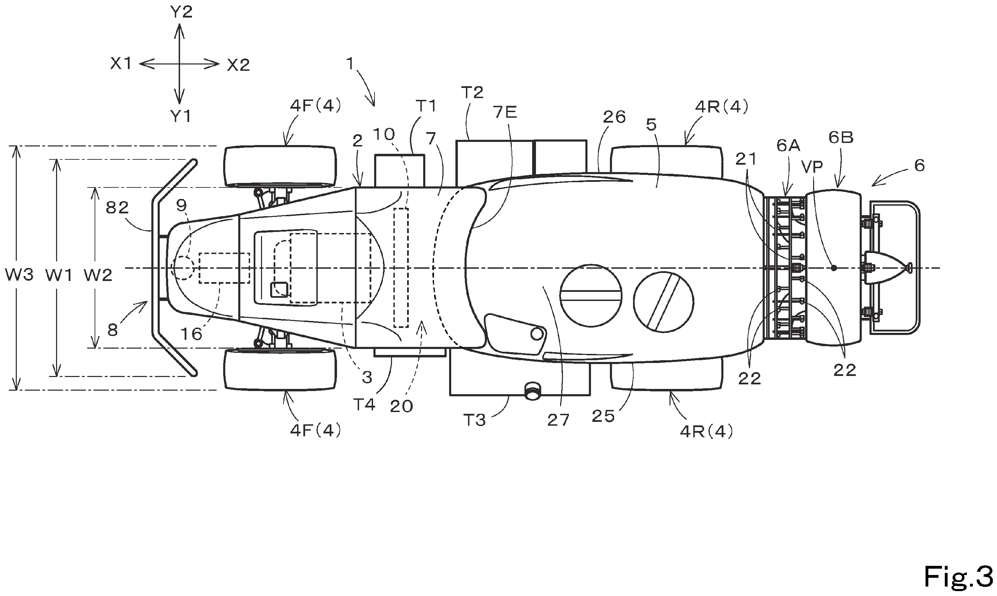

For example, the vehicle body 2 includes a detector to detect the position thereof using a global navigation satellite system (GNSS), and the positioning controller 65 acquires, as the position information of the working vehicle 1, the position detected by the detector or the position obtained by correcting the position of the detector to a predetermined position on the working vehicle 1. In the present example embodiment, the positioning controller 65 acquires, for example, the position of the widthwise center of the spreader 6 (in particular, air blowing fan 6B) (such a position may be hereinafter referred to as "vehicle body position VP" as shown in FIG. 3) as the position information of the working vehicle 1. For example, the positioning controller 65 corrects the position detected by the detector based on a predetermined calculation expression or the like stored in the storing medium to obtain the vehicle body position VP. It is noted that the vehicle body position VP may be the position of the widthwise center of the vehicle body 2 or the liquid chemical tank 5 or the like.

It is noted that the method of acquiring the vehicle body position VP is not limited to the above-described methods. For example, in the case where the detector includes an inertial measurement unit (IMU) including an acceleration sensor, a gyroscope sensor, and/or the like, the vehicle body position VP may be corrected using the roll angle, pitch angle, yaw angle and/or the like of the vehicle body 2 detected by the inertial measurement unit. The detector may be configured to detect the orientation (heading) of the vehicle body 2 (vehicle body heading VD).

The obstacle detection controller 66 detects proximity of an obstacle based on detection information from the object sensor 9, and performs a predetermined contact avoiding action. It is noted that the above described contact avoiding action, performed by the obstacle detection controller 66 when the object sensor 9 detects that the obstacle is at a predetermined distance from the vehicle body 2, may include changing the travel route to a direction that can avoid the contact with the obstacle and/or causing the working vehicle 1 to stop.

The contact detection controller 67 detects a contact of an obstacle with the bumper assembly 8 based on detection information from a contact sensor 76 (described later), and performs a predetermined action-at-contacting. The action-at-contacting, performed by the contact detection controller 67 of the present example embodiment when the contact sensor 76 detects the contact of an obstacle with the bumper assembly 8, includes causing the working vehicle 1 to stop. It is noted that the action-at-contacting, performed by the contact detection controller 67 when the contact sensor 76 detects the contact of an obstacle with the bumper assembly 8 as described above, may include performing an operation restriction mode to permit only one or more of the operations of the working vehicle 1 performed by the remote manual operator RC (for example, permit only an operation to cause the working vehicle 1 to travel rearward).

As described above, the controller 15 is configured or programmed to allow the working vehicle 1 to be manually caused to travel according to the operations of the remote manual operator RC, and cause the working vehicle 1 to autonomously travel based on the position information relating to the working vehicle 1, the obstacle detection information and the like. The following details the autonomous travel of the working vehicle 1. Autonomous travel

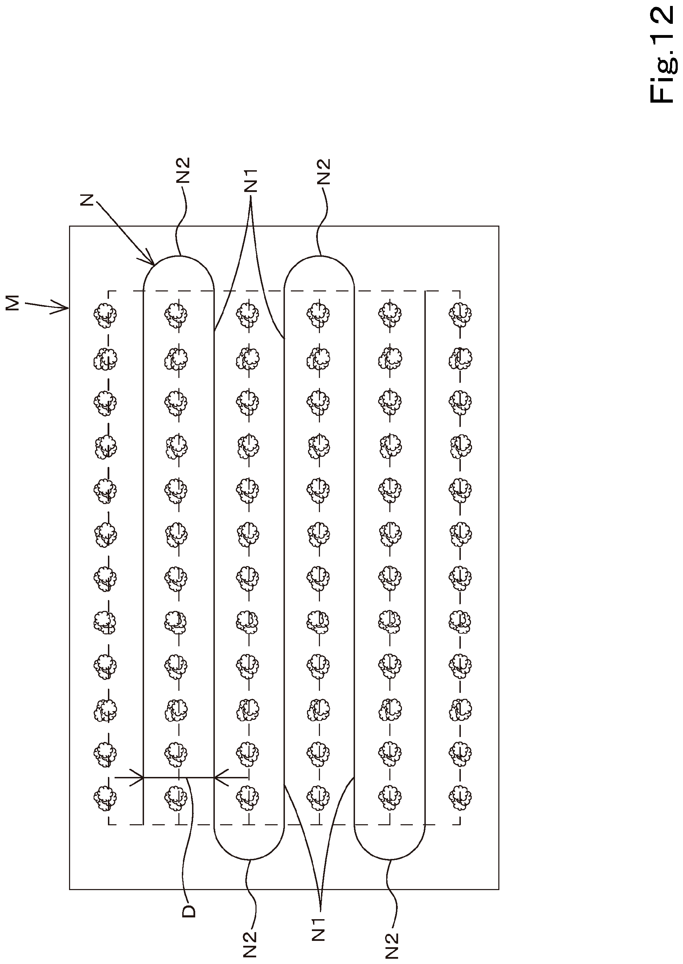

FIG. 12 illustrates an example of the planned travel route N. The planned travel route N is a path which is defined on the agricultural field map M indicating an agricultural field such that the working vehicle 1 travels between trees or crops in an orchard or the like. The planned travel route N is defined by a route definer provided in the controller 15 of the working vehicle 1, an external server provided external to the working vehicle 1, a management terminal to be operated by a manager who manages work performed by the working vehicle 1 (for example, a personal computer), or the like. For example, the route definer is provided in the external server, and the route definer acquires vehicle body positions VP and/or position information relating to nearby fruit trees and the like obtained when the working vehicle 1 is caused to manually travel in the agricultural field in response to the operation of the remote operating device RC . The route definer defines the planned travel route N based on such position information and an agricultural field map M stored in a database of the external server.

The route definer defines the planned travel route N while performing a simulation of automatic travel of the working vehicle 1 and spreading work performed by the spreader 6. Specifically, the external server references machine information relating to the working vehicle 1 (for example, identification information, size (dimension) information, information indicating specifications and/or the like relating to the working vehicle 1) stored in the database, and defines the planned travel route N to achieve goal(s) such as (1) the spreader 6 spreads the liquid chemical to fruit trees and/or crops in an amount just sufficient, (2) the working vehicle 1 does not contact fruit trees, crops, or other obstacles, (3) the working vehicle 1 avoids stops resulting from a multi-point turn and/or the like as much as possible, and/or the like. It is noted that the goals are merely examples, and at least one of them is prioritized. There are cases where a goal other than the above-described goals (1) to (3) is prioritized.

As shown in FIG. 12, the planned travel route N includes a plurality of work paths N1 each of which is defined between trees or crops in an orchard or the like and along which at least the spreader 6 spreads a liquid chemical. The plurality of work paths N1 are, for example, straight paths which are parallel to each other, and defined to be spaced at a predetermined separation interval D. The spreading controller 62, at least when the vehicle body position VP is positioned on any of the work paths N1, causes the spreader 6 to perform the action to spread the liquid chemical.

In the example shown in FIG. 12, the planned travel route N includes one or more connection paths N2 connecting the plurality of work paths N1. Each of the connection paths N2 is a curved or substantially curved path (or a path including a plurality of continuous straight lines) connecting one of the work paths N1 and another of the work paths N1, along which the working vehicle 1 turns. The spreading controller 62 may be configured or programmed to, when the vehicle body position VP is on any of the connection paths N2, cause the spreader 6 to perform the action to spread the liquid chemical or not cause the spreader 6 to perform the action to spread the liquid chemical. Whether to perform the spreading action at the connection paths N2 can be defined via a management terminal or the like communicably connected to a server or the like including the route definer.

It is noted that, in the description of the present example embodiment, the route definer defines the planned travel route N including the plurality of work paths N1 and the connection path(s) N2. However, the planned travel route N only needs to include at least a plurality of work paths N1, and does not need to include the connection path N2. In this case, for example, when the working vehicle 1 travels from the currently traveled work path N1 toward the next work path N1, the controller 15 defines a connection path N2 connecting the currently traveled work path N1 and the next work path N1 while controlling autonomous travel.

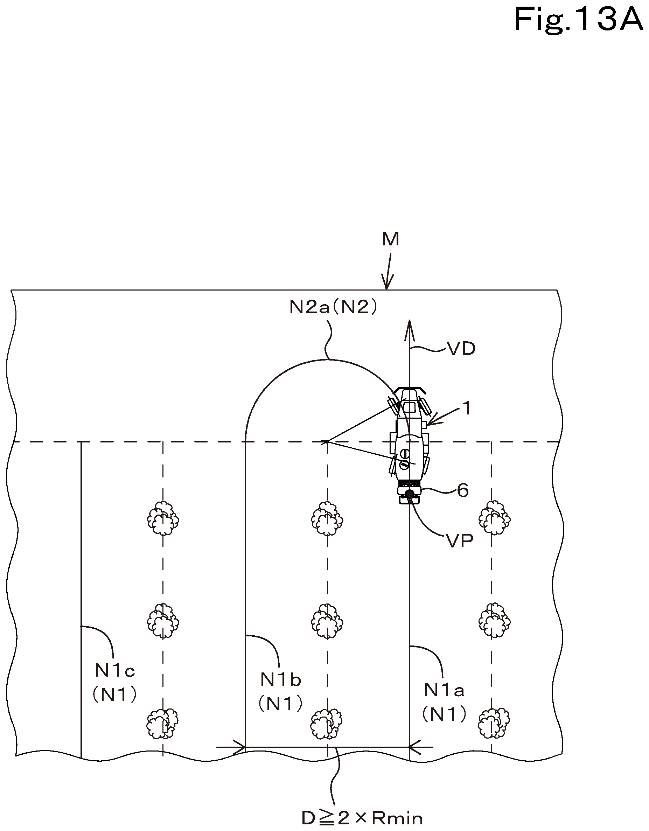

FIGS. 13A to 13D each illustrate an example of the connection path N2 of the planned travel route N. The route definer defines the connection paths N2 shown in FIGS. 13A to 13D according to the separation interval D between adjacent work paths N1 and the minimum turning radius Rmin of the working vehicle 1. For example, the machine information relating to the working vehicle 1 stored in the database of the server includes the minimum turning radius Rmin of the working vehicle 1 in the 4WS mode. The route definer references the minimum turning radius Rmin in the database, and defines the connection path N2 based on the minimum turning radius Rmin and based on the separation interval D between one work path N1 (first work path N1a) and another work path N1 (second work path N1b).

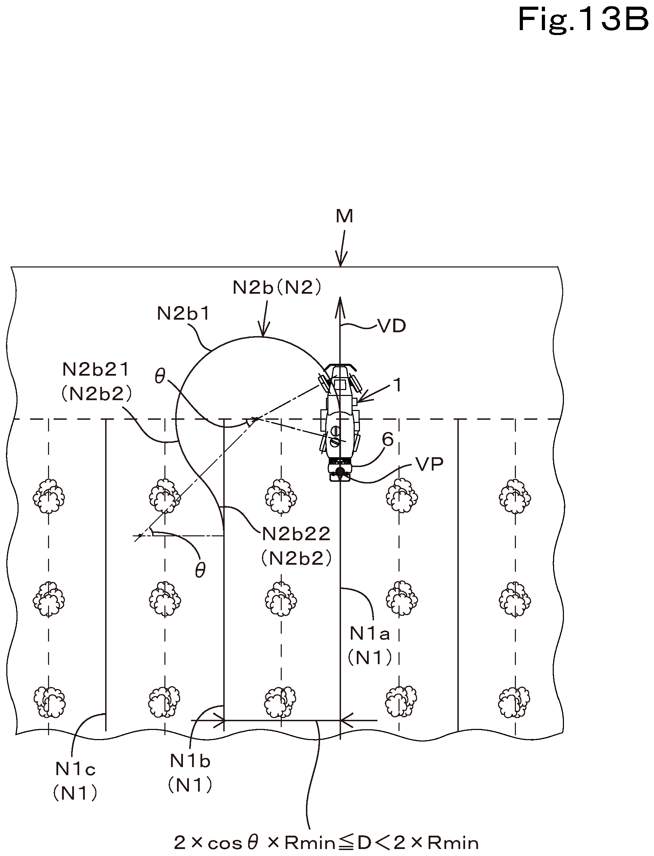

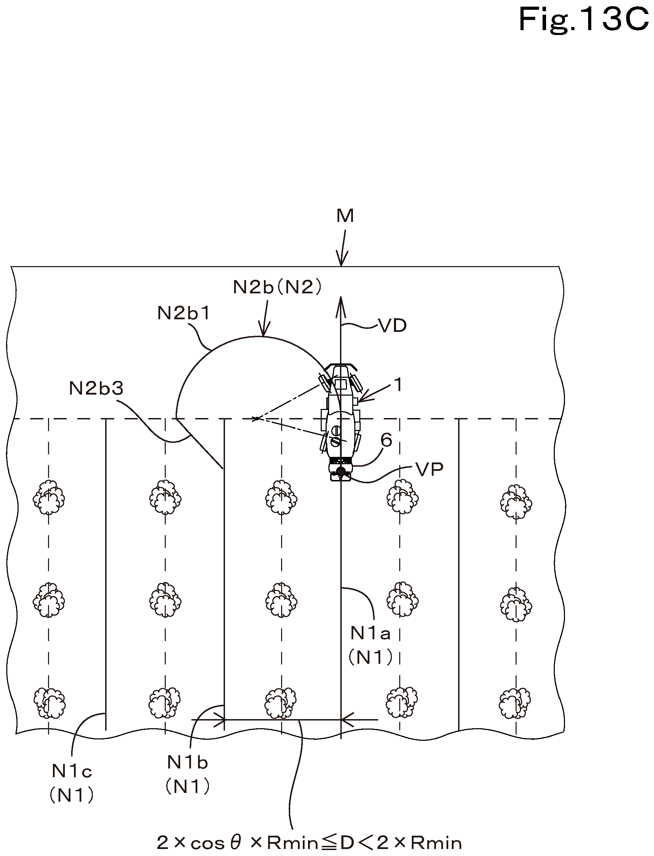

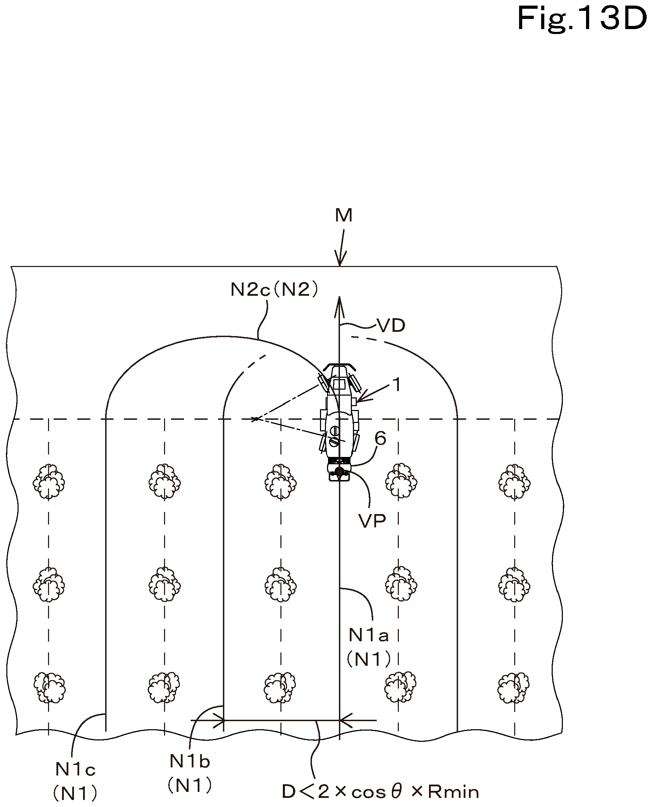

In the present example embodiment, the route definer is configured or programmed to, when the separation interval D is greater than or equal to twice the minimum turning radius Rmin (D ≥ 2 × Rmin), define a first connection path N2a connecting the first work path N1a and the second work path N1b (see FIG. 13A). The route definer is configured or programmed to, when the separation interval D is equal to or more than a specified multiple of the minimum turning radius Rmin (equal to or more than α times the minimum turning radius Rmin) and less than twice the minimum turning radius Rmin (α × Rmin ≤ D < 2 × Rmin), define a second connection path N2b connecting the first work path N1a and the second work path N1b (see FIG. 13B and 13C). The route definer is configured or programmed to, when the separation interval D is less than α times the minimum turning radius Rmin (D < α × Rmin), define a third connection path N2c connecting the first work path N1a and a third work path N1c (work path N1 to which the second work path N1b is adjacent at the opposite side from the first work path N1a) (see FIG. 13D).

The specified value α can be calculated using the following equation (1) based on a predetermined angle θ. It is noted that the predetermined angle θ is, for example, 45 degrees. It is noted that the predetermined angle θ may be defined appropriately using the management terminal or the like communicably connected to the server including the route definer or the like.$Specified value α = 2 \times cosθ$ (1)

The first connection path N2a shown in FIG. 13A connects the end point of the first work path N1a and the start point of the second work path N1b. The first connection path N2a is a path along which the vehicle body 2 turns from the end point of the first work path N1a toward the start point of the second work path N1b such that the heading of the vehicle body 2 (vehicle body heading VD) matches the second work path N1b. In FIG. 13A, the first connection path N2a is a path along which the vehicle body 2 turns from the end point of the first work path N1a toward the start point of the second work path N1b by 180 degrees. The working vehicle 1 travels on the first connection path N2a in the 2WS mode or in the 4WS mode depending on the separation interval D.

The second connection path N2b shown in FIGS. 13B and 13C connects the end point of the first work path N1a and the start point of the second work path N1b. In the examples shown in FIGS. 13B and 13C, the second connection path N2b is connected to a portion of a start portion of the second work path N1b that is closer to the end point of the second work path N1b than to the start point. The second connection path N2b includes a turn portion N2b1 for the working vehicle 1 to turn, and a guide portion N2b2 to guide (position) the working vehicle 1 to the second work path N1b.

The turn portion N2b1 is a portion for the working vehicle 1 to turn from the end point of the first work path N1a toward the start point of the second work path N1b such that the heading of the vehicle body (vehicle body heading VD) matches the second work path N1b. In FIGS. 13B and 13C, the turn portion N2b1 is a path for the working vehicle 1 to turn from the end point of the first work path N1a toward the start point of the second work path N1b by 180 degrees. The working vehicle 1 travels the turn portion N2b1 in the 4WS mode.

For example, in FIG. 13B, the guide portion N2b2 includes a first portion N2b21 for the working vehicle 1 to turn from the turn portion N2b1 toward the second work path N1b by a predetermined angle θ, and a second portion N2b22 for the working vehicle 1 to turn from the first portion N2b21 in the direction of extension of the second work path N1b by the predetermined angle θ. The working vehicle 1, after traveling the turn portion N2b1 in the 4WS mode, travels the first portion N2b21 and the second portion N2b22 while being kept in the 4WS mode.

In FIG. 13C, the guide portion N2b2 is a shift portion N2b3 for the working vehicle 1 to shift from the turn portion N2b1 in the direction of extension of the second work path N1b. The working vehicle 1, after traveling the turn portion N2b1 in the 4WS mode, switches from the 4WS mode to the crab mode, and travels the shift portion N2b3.

It is noted that, when the work efficiency of the working vehicle 1 is to be prioritized, the working vehicle 1 configured to switch the steering mode without making a stop may use the shift portion N2b3 as the guide portion N2b2, and the working vehicle 1 configured to switch the steering mode by making a stop may use the first portion N2b21 and the second portion N2b22 as the guide portion N2b2.

The third connection path N2c shown in FIG. 13D connects the end point of the first work path N1a and the start point of the third work path N1c. The third connection path N2c is for the working vehicle 1 to turn from the end point of the first work path N1a toward the start point of the third work path N1c such that the heading of the vehicle body 2 (vehicle body heading VD) matches the third work path N1c. That is, the third connection path N2c shown in FIG. 13D connects two work paths N1 by skipping one work path N1 therebetween. The turn portion N2b1 is for the working vehicle 1 to turn from the end point of the first work path N1a toward the start point of the third work path N1c by 180 degrees. The working vehicle 1 travels the third work path N2c in the 4WS mode.

It is noted that the above-described connection paths N2 are merely examples, and the first connection path N2a to the third connection path N2c may be used in any combination. In the above-described examples, although the route definer defines the connection paths N2 based on the separation interval D and the minimum turning radius Rmin, this does not imply any limitation. The method of causing the route definer to define the planned travel route N in the above-described examples is merely an example, and other methods may be used.

### Bumper assembly

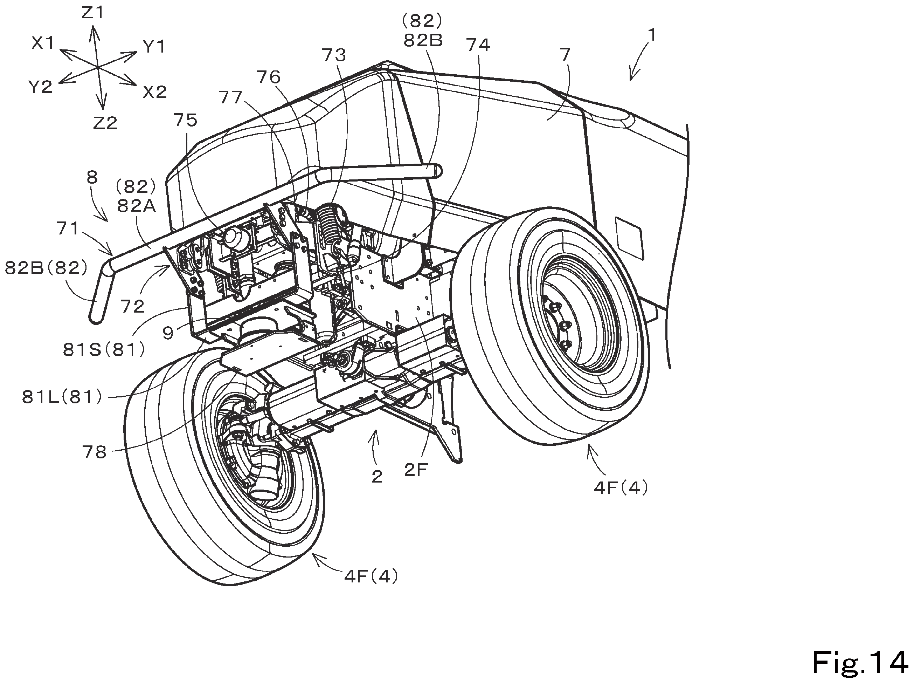

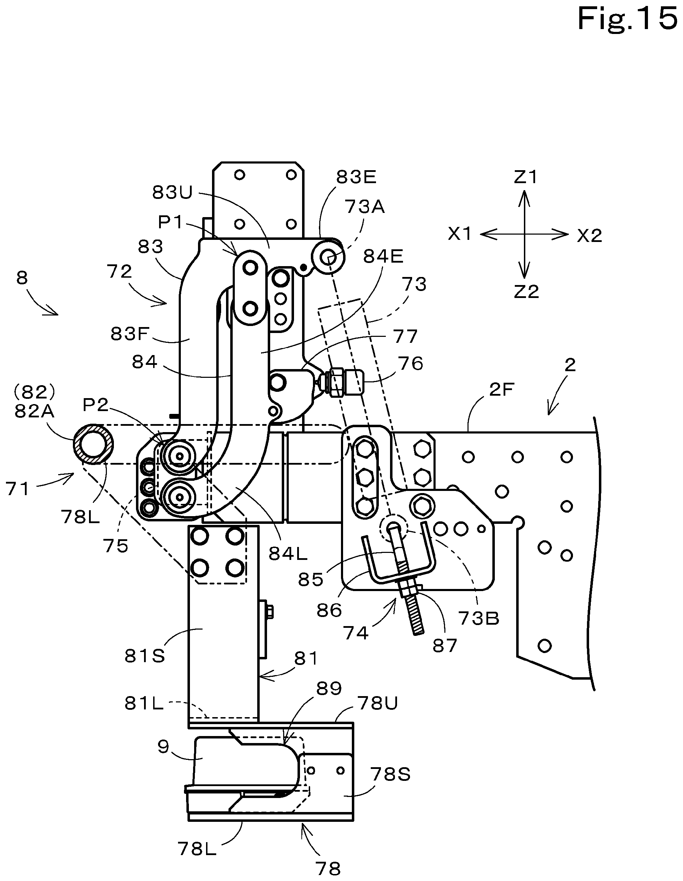

As shown in FIGS. 14 and 15, the bumper assembly 8 includes a bumper 71, linkage mechanism(s) 72 to connect the bumper 71 to the vehicle body 2 such that the bumper 71 is movable in the front-rear direction relative to the vehicle body 2, buffer spring(s) 73 as a first buffer to provide an elastic force to the bumper 71 against an external force when the external force acts on the bumper 71, tension adjuster mechanism(s) 74 to adjust a tension of the buffer spring 73, a pad member 75 as a second buffer to elastically contact the bumper 71 when the external force acts on the bumper 71, a contact sensor 76 to detect that the external force acts on the bumper 71, a contact detecting element 77 that is a reference of detection for the contact sensor 76, and a sensor bracket 78 to support the object sensor 9.

The bumper 71 includes a bumper main body 81 and a bumper bar 82. The bumper main body 81 is connected to the front portion of the vehicle body 2 such that the bumper main body 81 is movable forward and rearward. The bumper bar 82 is provided at a front portion of the bumper main body 81 such that the bumper bar 82 extends in a lateral direction. The bumper main body 81 includes a bumper lower frame 81L extending in the left-right direction at the front portion of the vehicle body 2, and a pair of bumper side frames 81S extending upward from a left end portion of the bumper lower frame 81L and a right end portion of the bumper lower frame 81L, respectively.

The bumper lower frame 81L includes flat portions at an upper and lower portions thereof and is in the form of a flat plate or substantially flat plate elongated in the left-right direction. The bumper side frames 81S extend upward from the left end portion of the bumper lower frame 81L and the right end portion of the bumper lower frame 81L, respectively, in a direction perpendicular or substantially perpendicular to the bumper lower frame 81L. Each bumper side frame 81S extends diagonally upward and forward from an intermediate portion thereof in the up-down direction.

The bumper bar 82 includes a bumper front portion 82A extending in the left-right direction at the front portion of the vehicle body 2, and a pair of bumper end portions 82B each extending diagonally rearward and outward relative to the vehicle body 2 from the left end portion of the bumper front portion 82A and the right end portion of the bumper front portion 82A, respectively.

The bumper front portion 82A is provided at the upper end of the left bumper side frame 81S of the bumper main body 81 and the upper end of the right bumper side frame 81S of the bumper main body 81 such that the bumper front portion 82A extends in the lateral direction. The bumper front portion 82A is forward of the front end of the hood 7. The bumper end portions 82B extend from a left end portion of the bumper front portion 82A and a right end portion of the bumper front portion 82A, respectively, toward outside surfaces of the front wheels 4F. With this, when the working vehicle 1 turns along a predetermined travel route, the working vehicle 1 is able to prevent the bumper end portions 82B from contacting an obstacle on the outside of the path of each front wheel 4F.

As shown in FIG. 2, a distance (bumper height) H1 in the up-down direction from a road surface S to the bumper bar 82 is equal to or substantially equal to a distance (front wheel height) H2 in the up-down direction from the road surface S to the top end of the front wheels 4F. As shown in FIG. 3, a width (bumper width) W1 of the bumper bar 82 in the left-right direction is greater than a width (hood width) W2 of the hood 7 in the left-right direction, and less than a distance (distance between the outer ends of the left and right front wheels 4F) W3 between the outside surface of the left front wheel 4F and the outside surface of the right front wheel 4F. It is noted that the bumper height H1 and the bumper width W1 are defined according to regulations at the destination and the like. Therefore, for example, the bumper height H1 may be less than the front wheel height H2. The bumper width W1 may be greater than the distance W2 between the outer ends of the left and right front wheels 4F.

As shown in FIG. 15, each linkage mechanism 72 is a parallel linkage mechanism to translate the bumper 71 in the front-rear direction, and includes a pair of link frames 83, 84 arranged in parallel to each other in the front-rear direction. The link frames 83, 84 are each provided at the upper portion of the bumper main body 81, and connect the bumper main body 81 and the vehicle body frame 2F. The link frames 83, 84 include a front first link frame 83, and a rear second link frame 84.

The first link frame 83 is an L-shaped or substantially L-shaped plate, and includes a front frame portion 83F extending in the up-down direction, and an upper frame portion 83U extending rearward from an upper end of the front frame portion 83F. The first link frame 83 is configured such that the upper frame portion 83U is pivotally supported by the vehicle body frame 2F at the center of the upper frame portion 83U in the front-rear direction, and the front frame portion 83F is pivotally supported by the corresponding bumper side frame 81S of the bumper main body 81 at a lower end of the front frame portion 83F.

The second link frame 84 is an L-shaped or substantially L-shaped plate, and includes a rear frame portion 84E extending in the up-down direction along the front frame portion 83F of the first link frame 83, and a lower frame portion 84L extending forward and downward from a lower end of the rear frame portion 84E. The second link frame 84 is configured such that the rear frame portion 84E is pivotally supported by the vehicle body frame 2F at an upper end of the rear frame portion 84E, and the lower frame portion 84L is pivotally supported by the corresponding bumper side frame 81S of the bumper main body 81 at the front end of the lower frame portion 84L.

The rear frame portion 84E of the second link frame 84 is pivotally supported by the vehicle body frame 2F at a position below and adjacent to a connector portion (proximal connector portion) P1 connecting the upper frame portion 83U of the first link frame 83 and the vehicle body frame 2F. That is, the rear frame portion 84E and the upper frame portion 83U are pivotally supported such that they are arranged in the up-down direction with respect to the vehicle body frame 2F.

The lower frame portion 84L of the second link frame 84 is pivotally supported by the bumper main body 81 at a position below and adjacent to a connector portion (distal connector portion) P2 connecting the front frame portion 83F of the first link frame 83 and the bumper main body 81. That is, the lower frame portion 84L and the front frame portion 83F are pivotally supported such that they are arranged in the up-down direction with respect to the bumper main body 81. Therefore, when an external force acts on the bumper bar 82 from the front, the bumper 71 moves rearward and downward while keeping its basic position before the external force acts.

Each buffer spring 73 is rearward of the bumper 71. A pair of the buffer springs 73 are provided at the left and right sides of the vehicle body frame 2F with the vehicle body frame 2F therebetween. Each buffer spring 73 is a tension coil spring, and includes a first end portion 73A engaged with a rear end (upper frame rear end) 83E of the upper frame portion 83U of the first link frame 83, and a second end portion 73B engaged with the vehicle body frame 2F via the corresponding tension adjuster mechanism 74. That is, the buffer spring 73 applies a certain tension force between the upper frame rear end 83E of the first link frame 83 and the tension adjuster mechanism 74. With this, the first link frame 83 is always biased and swung about the proximal end connector P1 in a direction that causes the distal end connector P2 to move forward with respect to the vehicle body 2. That is, the buffer spring 73 always biases and presses the bumper 71 in a direction that causes the bumper 71 to move forward. Therefore, when the bumper 71 is pressed rearward by an external force, the buffer spring 73 applies an elastic force to the bumper 71 against the external force.

It is noted that the bumper assembly 8 may include, instead of the buffer spring 73, a spring member (for example, a torsion spring) to bias and swing the first link frame 83 as described above at the proximal end connector P1. Also in this case, similar to the above-described bumper assembly 8 including the buffer spring 73, it is also possible to apply an elastic force to the bumper 71 against an external force when the bumper 71 is pressed rearward by the external force.

Each tension adjuster mechanism 74 includes a connecting bolt 85, a bolt receiving frame 86, and an adjusting nut 87. The tension adjuster mechanisms 74 are provided at the left and right outer surfaces of the vehicle body frame 2F, respectively. The bolt receiving frame 86 is connected to and supported at the corresponding outer surface of the vehicle body frame 2F.

The connecting bolt 85 is inserted through the bolt receiving frame 86 from above. The adjusting nut 87 is threaded onto the connecting bolt 85 from below the bolt receiving frame 86. The second end portion 73B of the buffer spring 73 is engaged with an upper end portion of the connecting bolt 85. Therefore, when the position of the adjusting nut 87 with respect to the connecting bolt 85 is changed, the length of the buffer spring 73 is changed, and the tension force is changed. Thus, the tension adjuster mechanism 74 is configured such that, by adjusting the length of the buffer spring 73 using the adjusting nut 87, the tension of the buffer spring 73 can be adjusted.

The pad member 75 is provided at the center in the left-right direction of the front portion of the vehicle body frame 2F. The pad member 75 is provided at a height position in the up-down direction at which the pad member 75 contacts the bumper bar 82 from the rear when the bumper 71 moves rearward and downward. At least the contact portion of the pad member 75 that contacts the bumper bar 82 is made of an elastic material such as natural rubber and/or silicone resin. Therefore, when the bumper bar 82 is pressed rearward by an external force and contacts the pad member 75, the pad member 75 applies an elastic force to the bumper bar 82 against the external force. It is noted that, instead of or in addition to the above-described elastic material, the pad member 75 may include a spring member (for example, a compression coil spring) to apply an elastic force to the bumper 71 against an external force when the bumper bar 82 is pressed rearward by the external force and contacts the pad member 75. Also with such a configuration, it is possible to achieve similar effects to those of the above-described pad member 75.

The contact sensor 76 is provided at the front portion of the vehicle body frame 2F. In the present example embodiment, the contact sensor 76 is provided at the front portion of the vehicle body frame 2F such that the contact sensor 76 is offset leftward or rightward from the center in the left-right direction of the front portion of the vehicle body frame 2F. The contact sensor 76 is positioned such that the contact sensor 76 is allowed to detect that an external force has acted on the bumper 71 when the bumper 71 moves from a reference location to a first location that is rearward of the reference location. The pad member 75 is positioned such that the pad member 75 contacts the bumper 71 when the bumper 71 moves from the first location to a second location that is rearward of the first location. That is, the contact sensor 76 is positioned such that the contact sensor 76 detects that an external force has acted on the bumper 71 before the bumper bar 82 contacts the pad member 75 as described above.

The contact sensor 76 is an on/off switch to be switched to an on or off state upon contact of the contact detecting element 77 with a detector portion. It is noted that the contact sensor 76 only needs to be configured to detect that an external force has acted on the bumper 71, and, for example, the contact sensor 76 may be a proximity sensor to be switched to an on or off state when the contact detecting element 77 has approached and reached a predetermined position. Alternatively, the contact sensor 76 may be configured to detect contact or proximity of a member other than the contact detecting element 77 (such as the first link frame 83, the second link frame 84, and/or the bumper main body 81).

The contact detecting element 77 is a piece of a plate, and pivotally supported at one of the left and right side surfaces of the vehicle body frame 2F such that the contact detecting element 77 faces the side surface (the one of the left and right side surfaces). The contact detecting element 77 is connected to and pivotally supported on the front frame portion 83F of the second link frame 84 at a position offset radially outward from the position where the contact detecting element 77 is pivoted on the vehicle body frame 2F. The detector portion of the contact sensor 76 is rearward of a rear edge of the contact detecting element 77. Therefore, when an external force acts on the bumper 71 and the second link frame 84 swings rearward about the upper end of the rear frame portion 84E, the contact detecting element 77 correspondingly swings rearward about the position where the contact detecting element 77 is pivoted on the vehicle body frame 2F. It follows that the rear edge of the contact detecting element 77 contacts the detector portion of the contact sensor 76.

In so doing, the contact detecting element 77 contacts the detector portion before the bumper bar 82 contacts the pad member 75. That is, the contact detecting element 77 is configured to contact the detector portion of the contact sensor 76 before the bumper bar 82 contacts the pad member 75 when the bumper 71 is pressed to move rearward and downward. With this, the contact sensor 76 is able to detect that an external force has acted on the bumper 71 before the bumper bar 82 contacts the pad member 75.

The sensor bracket 78 is connected to and supported at a lower portion of the bumper main body 81. The object sensor 9 is attached to the sensor bracket 78. That is, the object sensor 9 is provided in a portion of an area below the bumper 71 that is closer to the vehicle body 2 than the other portions of the area. Therefore, when the bumper 71 is pressed to move rearward by an external force, the object sensor 9 also correspondingly moves rearward. Thus, the object sensor 9 of the present example embodiment is configured to move rearward together with the bumper 71 when an external force acts on the bumper 71.

The sensor bracket 78 includes a bracket upper plate 78U above the object sensor 9, a bracket lower plate 78L below the object sensor 9, and bracket side plates 78S one of which connects a left edge of the bracket upper plate 78U and a left edge of the bracket lower plate 78L and the other of which connects a right edge of the bracket upper plate 78U and a right edge of the bracket lower plate 78L. The object sensor 9 is supported and fixed at an upper surface of the bracket lower plate 78L.

The bracket upper plate 78U projects leftward and rightward relative to the object sensor 9, and functions as a protection frame portion to protect the object sensor 9. Specifically, the bracket upper plate 78U is in the form of a plate configured such that the left-right dimension of the bracket upper plate 78U is greater than the left-right dimension of the object sensor 9, and the front-rear dimension of the bracket upper plate 78U is greater than the front-rear dimension of the object sensor 9, and covers an entirety of the object sensor 9 as seen from above. With this, it is possible to eliminate or reduce the likelihood that an obstacle will directly contact the object sensor 9 during travel. It is also possible to protect the object sensor 9 from dirt and stones from above.

The bracket upper plate 78U is fixed to and placed on the lower surface of the bumper lower frame 81L such that, when seen from above, the front edge of the bracket upper plate 78U coincides with the front edge of the bumper lower frame 81L, and a rear portion of the bracket upper plate 78U projects rearward relative to the rear edge of the bumper lower frame 81L. The bumper lower frame 81L is rearward of the bumper front portion 82A of the bumper bar 82. Therefore, the bracket upper plate 78U is also rearward of the bumper front portion 82A.

The bracket lower plate 78L projects leftward and rightward relative to the object sensor 9, and functions as a protection frame portion to protect the object sensor 9. Specifically, the bracket lower plate 78L is in the form of a plate such that the left-right dimension of the bracket lower plate 78L is greater than the left-right dimension of the object sensor 9 and the front-rear dimension of the bracket lower plate 78L is greater than the front-rear dimension of the object sensor 9, and covers an entirety of the object sensor 9 as seen from below. With this, it is possible to eliminate or reduce the likelihood that that an obstacle will directly contact the object sensor 9 during travel. It is also possible to protect the object sensor 9 from dirt and stones from below.

The bracket lower plate 78L is provided below the bracket upper plate 78U such that, as seen from below, the front edge of the bracket lower plate 78L coincides with the front edge of the bumper lower frame 81L and a rear portion of the bracket lower plate 78L projects rearward relative to the rear edge of the bumper lower frame 81L. Therefore, the bracket lower plate 78L is, similar to the bracket upper plate 78U, rearward of the bumper front portion 82A.

A space 88 to store the object sensor 9 is defined between the bracket lower plate 78L and the bracket upper plate 78U in the up-down direction. The object sensor 9 is supported at a front portion of the upper surface of the bracket lower plate 78L in the space 88. Therefore, even when the bumper 71 moves forward or rearward, the object sensor 9 is always positioned rearward and downward of the bumper front portion 82A.

Each of the bracket side plates 78S includes a cutout portion 89 through which the outside of the sensor bracket 78 and the space 88 communicate with each other. The cutout portion 89 is an opening having a size to allow an entirety or substantially entirety of the object sensor 9 to be exposed to the outside in a side view, and extends rearward from a front edge of the corresponding bracket side plate 78S. With this, the object sensor 9 is able to detect objects present within a wide range in an area in front of the vehicle body 2. The object sensor 9 of the present example embodiment is configured to detect objects present within a range of 137.5 degrees to the left and 137.5 degrees to the right of the front of the vehicle body 2.

### First variation

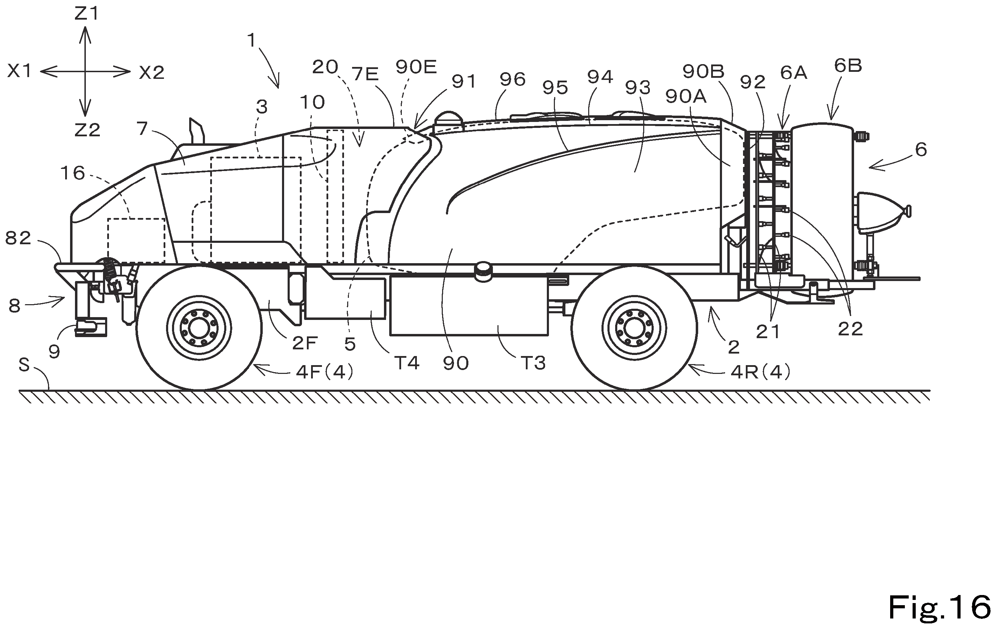

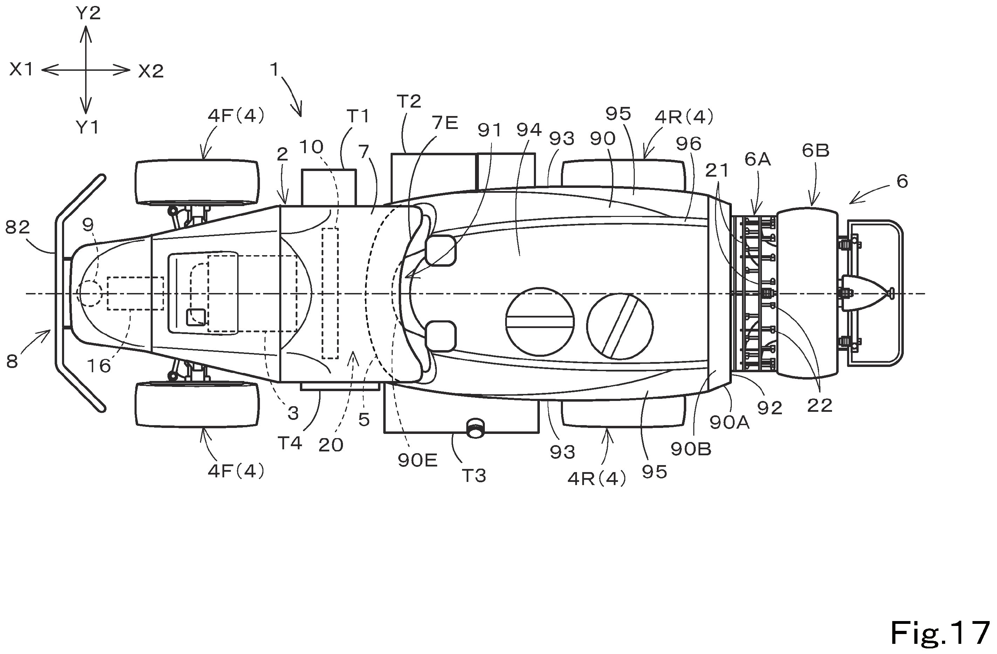

Although the working vehicle 1 of the above-described example embodiments is such that the liquid chemical tank 5 is exposed to the outside, as shown in FIGS. 16 and 17, the working vehicle 1 may include a body cover 90 to cover the liquid chemical tank 5. Specifically, the working vehicle 1 of a first variation includes the body cover 90 adjacent to and rearward of the hood 7. The body cover 90 is connected to and supported at an upper rear portion of the vehicle body frame 2F. It is noted that the body cover 90 may be connected to the vehicle body frame 2F via driving device(s) such as a hydraulic cylinder and/or an electric motor, and may be configured to automatically open and close according to an instruction from the controller 15.

The body cover 90 is made from a material having properties and a thickness that can protect the liquid chemical tank 5 thermally and physically. The body cover 90 is made from (includes) a material more weather resistant than the liquid chemical tank 5. It is noted that the body cover 90 may be made from a synthetic resin material or a metal material such as a steel plate or a stainless plate, provided that the material is highly heat resistant, highly impact resistant, and highly weather resistant.

The body cover 90 is sized to cover an entirety or substantially entirety of left and right side surfaces and upper surface of the liquid chemical tank 5. The body cover 90 is positioned inward of the rear end portion 7E such that a front end portion 90E thereof partially overlaps the rear end portion 7E of the hood 7. That is, the front end portion 90E of the body cover 90, which is a facing end portion that faces the hood 7, extends toward the interior of the rear end portion 7E of the hood 7.

A gap 91 in communication with the air passage chamber 20 is defined between the front end portion 90E of the body cover 90 and the rear end portion 7E of the hood 7. The gap 91 is provided along the rear end portion 7E of the hood 7, and in communication with the air passage chamber 20. Therefore, when the cooling fan 11 is actuated, air outside the working vehicle 1 flows from the rear to the front along a surface of the body cover 90, and is introduced into the air passage chamber 20 through the gap 91. Thus, the gap 91 is an air intake opening to allow outside air to enter the air passage chamber 20.

At least a portion of the gap 91 is rearward of the air passage chamber 20. With this, the air outside the working vehicle 1 is introduced from an area where the liquid chemical tank 5 is present (rear) to the air passage chamber 20 through the gap 91, and flows toward the prime mover 3 (forward) smoothly.

The body cover 90 includes a rear end plate 92. The rear end plate 92 extends along the left-right direction (direction intersecting the front-rear direction) at a position forward of the jetting head 6A. Therefore, the liquid chemical sprayed from the jetting head 6A is spread smoothly together with the air blown from the air blower 6B to the sides of the vehicle body 2 along the rear end plate 92.

The body cover 90 includes first inclined surface portion(s) 90A and a second inclined surface portion 90B. Each first inclined surface portion 90A extends diagonally forward and outward from the corresponding side edge of the rear end plate 92. The second inclined surface portion 90B extends diagonally forward and upward from an upper edge of the rear end plate 92. Therefore, the liquid chemical sprayed from the jetting head 6A is also spread diagonally forward of the vehicle body 2 together with the air blown from the air blower 6B along the first inclined surface portion(s) 90A and the second inclined surface portion 90B.

The body cover 90 includes side covers 93 and an upper cover 94. The side covers 93 cover side portions of the liquid chemical tank 5. The side covers 93 are detachably attached to the vehicle body 2 or the upper cover 94. Each of the side covers 93 includes a first projecting portion 95. The first projecting portions 95 project outward from the vehicle body 2 to the left and to the right, respectively, and each extend along the side surface of the corresponding side cover 93 such that the first projecting portion 95 is inclined upward in the front-to-rear direction. Therefore, even if a branch, a leaf or the like contacts the side cover 93 from the front during travel, they can be deflected smoothly rearward and upward relative to the vehicle body 2 along the first projecting portion 95.

The upper cover 94 covers the upper portion of the liquid chemical tank 5. The upper cover 94 includes a second projecting portion 96. The second projecting portion 96 projects upward from the vehicle body 2, and extends along the upper surface of the upper cover 94 such that the width thereof in the left-right direction of the vehicle body 2 increases in the front-to-rear direction. Therefore, even if a branch, a leaf or the like contacts the upper cover 94 from the front during travel, they can be smoothly deflected diagonally leftward and rearward or rightward and rearward of the vehicle body 2 along the second projecting portion 96.

### Second variation

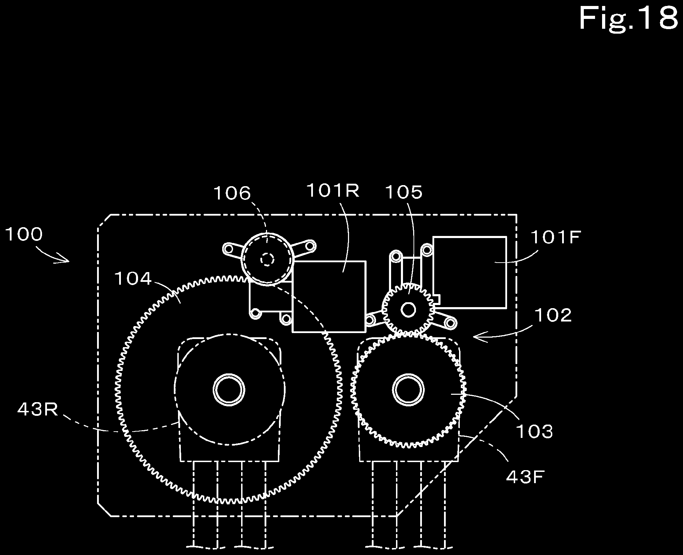

Although the working vehicle 1 of the above-described example embodiments includes the adjuster 45 configured such that a single steering motor 45A actuates two steering valve apparatuses 43 (front wheel steering valve apparatus 43F, rear wheel steering valve apparatus 43R), as shown in FIG. 18, the working vehicle 1 may include an adjuster 100 configured such that two steering motors 101F, 101R actuate two steering valve apparatuses 43 (front wheel steering valve apparatus 43F, rear wheel steering valve apparatus 43R).

Specifically, the adjuster 100 of a second variation includes a front wheel steering motor 101F, a rear wheel steering motor 101R, and a gear assembly 102. The front wheel steering motor 101F and the rear wheel steering motor 101R are electric motors driven by electricity to rotate. When the front wheel steering motor 101F and the rear wheel steering motor 101R are driven at the same rotation speed, the gear assembly 102 transmits the rotation power of the steering motor 101F and the rotation power of the steering motor 101R to the input shaft of the steering valve apparatus 43F and the input shaft of the steering valve apparatus 43R, respectively, with different rotation speeds (in other words, at a ratio of different rotation speeds, or with different rotation speed proportions).

The gear assembly 102 includes a front wheel gear 103, a rear wheel gear 104, a first pinion gear 105, and a second pinion gear 106. The front wheel gear 103 is connected to the input shaft of the front wheel steering valve apparatus 43F. The rear wheel gear 104 is connected to the input shaft of the rear wheel steering valve apparatus 43R. The first pinion gear 105 is connected to a driving shaft of the front wheel steering motor 101F. The second pinion gear 106 is connected to a driving shaft of the rear wheel steering motor 101R.

The front wheel gear 103, the rear wheel gear 104, the first pinion gear 105, and the second pinon gear 106 are spur gears. The front wheel gear 103 engages the first pinion gear 105. The rear wheel gear 104 engages the second pinion gear 106. The front wheel gear 103 and the rear wheel gear 104 do not engage each other, and each independently rotate. Therefore, when the front wheel steering motor 101F is actuated, the front wheel gear 103 rotates and drives the front wheel steering valve apparatus 43F. On the other hand, when the rear wheel steering motor 101R is actuated, the rear wheel gear 104 rotates and drives the rear wheel steering valve apparatus 43R. In so doing, the controller 15 individually controls the operation of the front wheel steering motor 101F and the operation of the rear wheel steering motor 101R, respectively, to steer the front wheels 4F and the rear wheels 4R.

The first pinion gear 105 and the second pinion gear 106 are the same gears. The ratio of rotations of the first pinion gear 105 and the second pinion gear 106 when the front wheel steering motor 101F and the rear wheel steering motor 101R are driven at the same rotation speed is, for example, 1/1. On the other hand, the ratio of rotations of the front wheel gear 103 and the rear wheel gear 104 is, for example, 2/1. That is, the adjuster 100 of the second variation is configured such that, when the front wheel steering motor 101F and the rear wheel steering motor 101R are driven at the same rotation speed, the front wheel gear 103 rotates twice as fast as the rear wheel gear 104.

When the front wheel steering motor 101F and the rear wheel steering motor 101R are driven at the same rotation speed as described above, the hydraulic pressure output from the front wheel steering valve apparatus 43F is higher than the hydraulic pressure output from the rear wheel steering valve apparatus 43R, and the front wheel steering cylinder 41F is driven to a greater extent than the rear wheel steering cylinder 41R. It follows that the steering angle of the front wheels 4F is twice or substantially twice as large as the steering angle of the rear wheels 4R.

Thus, when the steering system 18 causes the working vehicle 1 to turn while traveling by steering the front wheels 4F and the rear wheels 4R by the counter-phase steering (4WS mode), the steering system 18 causes the hydraulic pressure output from the front wheel steering valve apparatus 43F to be higher than the hydraulic pressure output from the rear wheel steering valve apparatus 43R and defines the ratio of steering angles of the front and rear wheels such that the steering angle of the front wheels 4F is greater than the steering angle of the rear wheels 4R. With this, it is possible to achieve effects similar to those of the working vehicle 1 of the foregoing example embodiment. Furthermore, without having to control the operations of the front wheel steering motor 101F and the rear wheel steering motor 101R independently of each other, it is possible to define the steering angle of the front wheels 4F and the steering angle of the rear wheels 4R such that the steering angle of the front wheels 4F is twice or substantially twice as large as the steering angle of the rear wheels 4R.

When the steering system 18 causes the working vehicle 1 to travel by steering the front wheels 4F and the rear wheels 4R by the in-phase steering (crab mode), the steering system 18 causes the hydraulic pressure output from the front wheel steering valve apparatus 43F to be the same as the hydraulic pressure output from the rear wheel steering valve apparatus 43R and to cause the steering angle of the front wheels 4F to be the same as the steering angle of the rear wheels 4R. In so doing, the controller 15 performs adjustment such that the rotation speed of the front wheel steering motor 101F is lower than the rotation speed of the rear wheel steering motor 101R and that the hydraulic pressure output from the front wheel steering valve apparatus 43F is the same as the hydraulic pressure output from the rear wheel steering valve apparatus 43R. With this, the operation stroke of the front wheel steering cylinder 41F and the rear wheel steering cylinder 41R are adjusted to be the same as each other.

### Third variation

Although the working vehicle 1 of the foregoing example embodiments is configured to drive the front wheel steering cylinder 41F and the rear wheel steering cylinder 41R by actuating the steering valve apparatuses 43 using the steering motor 45A (electric motor), the working vehicle 1 may be configured to drive the front wheel steering cylinder 41F and the rear wheel steering cylinder 41R using proportional control valve(s) configured to adjust the delivery pressure of the hydraulic fluid instead of the steering motor 45A and the steering valve apparatuses 43.

The present invention provides working vehicles 1 described in the following items.

(Item A1) A working vehicle 1 including a vehicle body 2, a prime mover 3 provided on the vehicle body 2, a traveling device 4 to support the vehicle body 2 such that the vehicle body 2 is allowed to travel, a material storage portion 5 to store a work material which is a material for work, and a radiator assembly 10 to cool a coolant circulated through the prime mover 3 via heat exchange with outside air, wherein a direction in which the vehicle body 2 travels straight is a front-rear direction, the prime mover 3 is provided forward of the material storage portion 5 with an air passage chamber 20 between the prime mover 3 and the material storage portion 5, the air passage chamber 20 being a chamber in which the outside air flows, and the radiator assembly 10 is provided in the air passage chamber 20.

With the working vehicle 1 according to item A1, the air flowing through the air passage chamber 20 and the radiator assembly 10 make it possible to eliminate or reduce the likelihood that the heat generated by the prime mover 3 will be transmitted to the material storage portion 5, and thus it is possible to reduce the thermal load on the material storage portion 5. Therefore, this makes it possible to reduce the size of the vehicle body 2, contributing to an improvement in maneuverability.

Furthermore, with the working vehicle 1 according to item A1, the coolant circulating between the radiator assembly 10 and the prime mover 3 is appropriately cooled by the air flowing through the air passage chamber 20, making it possible to efficiently cool the prime mover 3. With this, it is possible to further reduce the thermal load on the material storage portion 5.

(Item A2) The working vehicle 1 according to item A1, further including a cooling fan 11 to blow the outside air from an area where the material storage portion 5 is present toward the prime mover 3.

With the working vehicle 1 according to item A2, the material storage portion 5 is efficiently cooled by the outside air, and it is possible to reliably eliminate or reduce the likelihood that the hot air generated by the prime mover 3 will flow toward the material storage portion 5. With this, it is possible to further reduce the thermal load on the material storage portion 5.

(Item A3) The working vehicle 1 according to item A1 or A2, further including a cooling fan 11 to blow the outside air to the prime mover 3, wherein the radiator assembly 10 includes a first air passage surface 31 positioned to face the material storage portion 5, and a second air passage surface 32 positioned to face the prime mover 3, and the cooling fan 11 is adjacent to the second air passage surface 32.

With the working vehicle 1 according to item A3, it is possible to more reliably blow the air having passed through the radiator assembly 10 toward the prime mover 3, further contributing to the cooling of the prime mover 3. With this, it is possible to further reduce the thermal load on the material storage portion 5.

(Item A4) The working vehicle 1 according to any one of items A1 to A3, further including an oil cooler 12 to cool hydraulic fluid for at least one hydraulic device provided on the vehicle body 2 via heat exchange with the outside air, wherein the oil cooler 12 is provided in the air passage chamber 20.

With the working vehicle 1 according to item A4, the air flowing through the air passage chamber 20, the radiator assembly 10, and the oil cooler 12 make it possible to more reliably eliminate or reduce the likelihood that the heat generated by the prime mover 3 will be transmitted to the material storage portion 5, making it possible to further reduce the thermal load on the material storage portion 5. Furthermore, this also makes it possible to appropriately cool the hydraulic fluid circulated between the oil cooler 12 and the hydraulic device(s) using the air flowing through the air passage chamber 20, making it possible to maintain the stable operations of the hydraulic devices. With this, maneuverability is further improved.

(Item A5) The working vehicle 1 according to item A4, wherein the radiator assembly 10 includes a first air passage surface 31 positioned to face the material storage portion 5 and a second air passage surface 32 positioned to face the prime mover 3, and the oil cooler 12 is adjacent to the first air passage surface 31.

With the working vehicle 1 according to item A5, the coolant is more efficiently cooled by the air having passed through the oil cooler 12, further contributing to the cooling of the prime mover 3. With this, it is possible to further reduce the thermal load on the material storage portion 5.

(Item A6) The working vehicle 1 according to item A5, further including a cooling fan 11 to blow the outside air to the prime mover 3, wherein the cooling fan 11 is adjacent to the second air passage surface 32.

With the working vehicle 1 according to item A6, it is possible to reliably blow the air flowing in the air passage chamber 20 to the oil cooler 12, and therefore the hydraulic fluid is more efficiently cooled, further contributing to maintaining the operation stability of the hydraulic devices. With this, maneuverability is further improved.

(Item A7) The working vehicle 1 according to any one of items A1 to A6, further including a travel pump 16A to be driven by the prime mover 3 to deliver hydraulic fluid, and a travel motor 17 to drive the traveling device 4 by the hydraulic fluid delivered by the travel pump16A, wherein the travel pump 16A is forward of and adjacent to the prime mover 3.

With the working vehicle 1 according to item A7, it is possible to position the relatively large-sized prime mover 3 at a location rearward of the travel pump 16A, making it possible to reduce the size of the front portion of the vehicle body 2. With this, maneuverability is further improved.

(Item A8) The working vehicle 1 according to any one of items A1 to A7, further including an exhauster 13 to guide air discharged from the prime mover 3 to an outside of the working vehicle 1, wherein the exhauster 13 is forward of and adjacent to the prime mover 3.

With the working vehicle 1 according to item A8, it is possible to eliminate or reduce the likelihood that the heat generated by the exhauster 13, in addition to the heat generated by the prime mover 3, will be transmitted to the material storage portion 5, making it possible to further reduce the thermal load on the material storage portion 5.

(Item A9) The working vehicle 1 according to any one of items A1 to A8, further including an air cleaner 14 to clean air to be supplied to the prime mover 3, wherein the air cleaner 14 is provided in the air passage chamber 20.

With the working vehicle 1 according to item A9, it is possible to keep the temperature of the air supplied from the air cleaner 14 to the prime mover 3 low, making it possible to keep a stable output of the prime mover 3. With this, maneuverability is further improved.

(Item A10) The working vehicle 1 according to any one of items A1 to A9, further including a spreader 6 to spread a liquid chemical to a surrounding area of the vehicle body 2, wherein the material storage portion 5 is a liquid chemical tank to store the liquid chemical.

The working vehicle 1 according to item 10 is a liquid chemical spreading vehicle including the material storage portion 5 as a liquid chemical tank, and the spreader 6. With the working vehicle 1, similar to the working vehicle 1 according to the above-described item A1, it is possible to reduce the thermal load on the material storage portion (liquid chemical tank) 5, and reduce the size of the vehicle body 2. With this, maneuverability is improved.

Furthermore, with the working vehicle 1 according to item 10, since the thermal load on the material storage portion 5 is reduced, it is possible to eliminate or reduce the likelihood that the liquid chemical stored in the material storage portion 5 will deteriorate due to radiant heat or ultraviolet light, and prevent or reduce adverse effects that would otherwise be caused by spreading a high-temperature liquid chemical to agricultural crops or soil.

(Item A11) The working vehicle 1 according to item A10, further including a spreading pump 6C to cause the spreader 6 to spread the liquid chemical, and a spreading motor 19 to provide rotation power to the spreader 6, wherein the spreading pump 6C and the spreading motor 19 are downward of the radiator assembly 10 in the air passage chamber 20.

With the working vehicle 1 (liquid chemical spreading vehicle) according to item A11, the spreading pump 6C and the spreading motor 19 are cooled by the air flowing through the air passage chamber 20, making it possible to keep stable operations of them. With this, maneuverability is further improved.

(Item A12) The working vehicle 1 according to any one of items A1 to A11, further including a hood 7 to cover the prime mover 3, and a body cover 90 to cover the material storage portion 5, wherein an air intake opening 91 in communication with the air passage chamber 20 is defined between a facing end portion 7E of the hood 7 and a facing end portion 90E of the body cover 90 that face each other.

With working vehicle 1 according to item A12, the air introduced through the air intake opening 91 to the air passage chamber 20 functions as a partition wall between an area where the prime mover 3 is present and an area where the material storage portion 5 is present, making it possible to effectively reduce the thermal load on the material storage portion 5.

(Item A13) The working vehicle 1 according to item A12, wherein at least a portion of the air intake opening 91 is rearward of the air passage chamber 20.

With the working vehicle 1 according to item A13, the outside air is smoothly guided from the rear toward the gap 91 along the surface of the body cover 90, making it possible to efficiently introduce cool air into the air passage chamber 20. With this, it is possible to effectively reduce the thermal load on the material storage portion 5.

(Item A14) The working vehicle 1 according to item A13, wherein the facing end portion 90E of the body cover 90 extends toward an interior of the hood 7.

With the working vehicle 1 according to item A14, the outside air guided into the gap 91 as described above is smoothly guided toward the air passage chamber 20 along the facing end portion 90E of the body cover 90, making it possible to efficiently introduce the cool air into the air passage chamber 20. With this, it is possible to more effectively reduce the thermal load on the material storage portion 5.

(Item A15) A working vehicle 1 including a vehicle body 2, a prime mover 3 provided on the vehicle body 2, a traveling device 4 to support the vehicle body 2 such that the vehicle body 2 is allowed to travel, a liquid chemical tank 5 to store a liquid chemical, a spreader 6 to spread the liquid chemical to a surrounding area of the vehicle body 2, and a body cover 90 to cover the liquid chemical tank 5.

The working vehicle 1 according to item A15 is a liquid chemical spreading vehicle including the liquid chemical tank 5 as a material storage portion, the spreader 6, and the body cover 90 to cover the liquid chemical tank 5. With the working vehicle 1, it is possible to protect the liquid chemical tank 5 from solar radiant heat, ultraviolet light, collisions with obstacles, and the like with the body cover 90. Furthermore, it is possible to eliminate or reduce the likelihood that the liquid chemical stored in the liquid chemical tank 5 will deteriorate due to radiant heat or ultraviolet light, and prevent or reduce adverse effects that would otherwise be caused by spreading the high-temperature liquid chemical over the agricultural crops or soil.

(Item A16) The working vehicle 1 according to item A15, wherein the body cover 90 includes a material more weather resistant than the liquid chemical tank 5.

With the use of the body cover 90 with a higher weather resistance than the liquid chemical tank 5 like the working vehicle 1 according to item A16, it is possible to prevent or reduce the deterioration of the body cover 90 itself due to ultraviolet radiation, and effectively protect the liquid chemical tank 5 and the liquid chemical in the liquid chemical tank 5.

(Item A17) The working vehicle 1 according to item A15 or A16, further including a hood 7 to cover the prime mover 3, wherein a direction in which the vehicle body 2 travels straight is a front-rear direction, the hood 7 is forward of and adjacent to the body cover 90, and is configured to cover a front portion of the liquid chemical tank 5 from front.

With the working vehicle 1 according to item A17, when the working vehicle 1 travels between trees in an orchard or the like, a leaf, a branch or the like does not contact the front portion of the liquid chemical tank 5. With this, it is possible to effectively eliminate or reduce the likelihood that the liquid chemical tank 5 will deform or be damaged due to physical loads.

(Item A18) The working vehicle 1 according to item A17, wherein the hood 7 includes a material more weather resistant than the liquid chemical tank 5.

With the use of the hood 7 with a higher weather resistance than the liquid chemical tank 5 like the working vehicle 1 according to item A18, it is possible to prevent or reduce the deterioration of the hood 7 itself due to ultraviolet radiation, and effectively eliminate or reduce the likelihood that the front portion of the liquid chemical tank 5 will deform or deteriorate due to ultraviolet radiation.

(Item A19) The working vehicle 1 according to item A17 or A18, wherein the prime mover 3 is provided forward of the liquid chemical tank 5 with an air passage chamber 20 between the prime mover 3 and the liquid chemical tank 5.

With the working vehicle 1 according to item A19, air flowing in the air passage chamber 20 eliminates or reduce the likelihood that heat generated by the prime mover 3 will be transmitted to the liquid chemical tank 5, making it possible to effectively eliminate or reduce the likelihood that the liquid chemical tank 5 will deform or deteriorate due to heat, and the liquid chemical stored in the liquid chemical tank 5 will deteriorate, etc.

(Item A20) The working vehicle 1 according to item A19, wherein an air intake opening 91 in communication with the air passage chamber 20 is provided between a facing end portion 7E of the hood 7 and a facing end portion 90E of the body cover 90.

With the working vehicle 1 according to item A20, air introduced through the air intake opening 91 to the air passage chamber 20 functions as a partition wall between an area where the prime mover 3 is provided and an area where the liquid chemical tank 5 is provided, making it possible to effectively eliminate or reduce the likelihood that the liquid chemical tank 5 will deform or deteriorate due to heat, and the liquid chemical stored in the liquid chemical tank 5 will deteriorate, etc.

(Item A21) The working vehicle 1 according to any one of items A15 to A20, wherein the spreader 6 includes a jetting head 6A to spray the liquid chemical, and an air blower 6B to blow outside air to the jetting head 6A, a direction in which the vehicle body 2 travels straight is a front-rear direction, the jetting head 6A is rearward of and adjacent to the liquid chemical tank 5, the air blower 6B is rearward of and adjacent the jetting head 6A, and the body cover 90 includes a rear end plate 92 extending in a direction intersecting the front-rear direction at a position forward of the jetting head 6A.

With the working vehicle 1 according to item A21, the liquid chemical sprayed from the jetting head 6A is smoothly spread toward the sides of the vehicle body 2 along the rear end plate 92 together with air blown from the air blower 6B, so that the liquid chemical is not likely to adhere to an upper surface or side surfaces of the body cover 90. With this, maintainability is improved.

(Item A22) The working vehicle 1 according to item A21, wherein the body cover 90 includes a first inclined surface portion 90A extending diagonally forward and outward from a side edge portion of the rear end plate 92.

With the working vehicle 1 according to item A22, the liquid chemical sprayed from the jetting head 6A is also spread diagonally forward and outward of the vehicle body 2 along the first inclined surface portion(s) 90A and a second inclined surface portion 90B together with air blown from the air blower 6B, making it possible to efficiently spread the liquid chemical to a larger area.

(Item A23) The working vehicle 1 according to item A22, wherein the body cover 90 includes a second inclined surface portion 90B extending diagonally forward and upward from an upper edge portion of the rear end plate 92.

With the working vehicle 1 according to item A23, the liquid chemical sprayed from the jetting head 6A is also spread diagonally forward and upward from the vehicle body 2 along the second inclined surface portion 90B together with air blown from the air blower 6B, making it possible to efficiently spread the liquid chemical to a larger area.

(Item A24) The working vehicle 1 according to any one of items A21 to A23, wherein the body cover 90 includes a side cover 93 to cover a side portion of the liquid chemical tank 5, the side cover 93 includes a first projecting portion 95 which projects outward from the vehicle body 2 along a width direction of the vehicle body 2, and extends along a side surface of the side cover 93 such that the first projecting portion 95 is inclined upward in a front-to-rear direction.

With the working vehicle 1 according to item A24, even if a branch, a leaf or the like contacts the side cover 93 from the front when the working vehicle 1 travels between trees in an orchard or the like, they can be smoothly deflected rearward and upward relative to the vehicle body 2 along the first projecting portion 95. With this, it is possible to effectively eliminate or reduce the likelihood that the body cover 90 will deform or be damaged by a physical load.

(Item A25) The working vehicle 1 according to any one of items A21 to A24, wherein the body cover 90 includes an upper cover 94 to cover an upper portion of the liquid chemical tank 5, and the upper cover 94 includes a second projecting portion 96 which projects upward from the vehicle body 2, and extends along an upper surface of the upper cover 94 such that a width thereof in a width direction of the vehicle body 2 increases in the front-to-rear direction.

With the working vehicle 1 according to item A25, even if a branch, a leaf or the like contacts the upper cover 94 from the front when the working vehicle 1 travels between trees in an orchard or the like, they can be smoothly deflected diagonally leftward and rearward or diagonally rightward and rearward relative to the vehicle body 2 along the second projecting portion 96. With this, it is possible to effectively eliminate or reduce the likelihood that the body cover 90 will deform or be damaged by a physical load.

(Item A26) The working vehicle 1 according to any one of items A15 to A25, wherein the body cover 90 includes an upper cover 94 to cover an upper portion of the liquid chemical tank 5, and a side cover 93 to cover a side portion of the liquid chemical tank 5, and the side cover 93 is detachably attached to the vehicle body 2 or the upper cover 94.

With the working vehicle 1 according to item A26, by detaching the side cover 93, it is possible to perform inspection and cleaning of the side portion of the liquid chemical tank 5 covered by the body cover 90 and its surroundings, and therefore maintainability is further improved.

(Item B1) A working vehicle 1 including a vehicle body 2, a working device 6 provided at a rear portion of the vehicle body 2, at least one front wheel 4F and at least one rear wheel 4R to support the vehicle body 2 such that the vehicle body 2 is allowed to travel, and a steering system 18 to adjust a steering angle of the at least one front wheel 4F and a steering angle of the at least one rear wheel 4R, wherein the steering system 18 is configured to, when steering the at least one front wheel 4F and the at least one rear wheel 4R by counter-phase steering, cause the steering angle of the at least one front wheel 4F to be greater than the steering angle of the at least one rear wheel 4R.

With the working vehicle 1 according to item B1, the turning center Q1, when the working vehicle 1 is turned by steering the front wheel(s) 4F and the rear wheel(s) 4R by counter-phase steering, is defined to be displaced to the rear when viewed from the side of the vehicle body 2, achieving high turning performance and enabling smooth turning and travel even in a small space. With this, maneuverability is improved.

(Item B2) The working vehicle 1 according to item B1, wherein the steering system 18 is configured to, when steering the at least one front wheel 4F and the at least one rear wheel 4R by the counter-phase steering, cause the steering angle of the at least one front wheel 4F to be twice or substantially twice as large as the steering angle of the at least one rear wheel 4R.

With the working vehicle 1 according to item B2, the turning center Q1, when the working vehicle 1 is turned by steering the front wheel(s) 4F and the rear wheel(s) 4R by the counter-phase steering, is defined at a predetermined point displaced to the rear when viewed from the side of the vehicle body 2, enabling smooth and stable turning and travel even in a small space. With this, maneuverability is further improved.

(Item B3) The working vehicle 1 according to item B1 or B2, further including a prime mover 3 provided on the vehicle body 2, wherein the steering system 18 includes a steering pump 44 to be driven by power from the prime mover 3 to deliver hydraulic fluid, a front wheel steering valve apparatus 43F to adjust a pressure of the hydraulic fluid supplied from the steering pump 44 to adjust the steering angle of the at least one front wheel 4F, a rear wheel steering valve apparatus 43R to adjust the pressure of the hydraulic fluid supplied from the steering pump 44 to adjust the steering angle of the at least one rear wheel 4R, and an adjuster 45 to adjust a hydraulic pressure output from the front wheel steering valve apparatus 43F and a hydraulic pressure output from the rear wheel steering valve apparatus 43R, and the adjuster 45 is configured to, when steering the at least one front wheel 4F and the at least one rear wheel 4R by the counter-phase steering, cause the hydraulic pressure output from the front wheel steering valve apparatus 43F to be higher than the hydraulic pressure output from the rear wheel steering valve apparatus 43R.

With the working vehicle 1 according to item B3, it is possible to adjust the steering angle of the front wheel(s) 4F and the steering angle of the rear wheel(s) 4R using the hydraulic pressure, and thus possible to stably steer both the front wheel(s) 4F and the rear wheel(s) 4R regardless of road conditions. With this, maneuverability is further improved.

(Item B4) The working vehicle 1 according to item B3, wherein the adjuster 45 includes a steering motor 45A to be driven to rotate, and a gear assembly 45B to transmit rotation power of the steering motor 45A to an input shaft of the front wheel steering valve apparatus 43F and an input shaft of the rear wheel steering valve apparatus 43R at a ratio of different rotation speeds, and the ratio of different rotation speeds is defined such that, when the at least one front wheel 4F and the at least one rear wheel 4R are steered by the counter-phase steering, the steering angle of the at least one front wheel 4F is greater than the steering angle of the at least one rear wheel 4R.

With the working vehicle 1 according to item B4, it is possible to adjust the steering angle of the front wheel(s) 4F and the steering angle of the rear wheel(s) 4R by controlling the drive of the steering motor 45A, and therefore high maneuverability can be achieved through relatively simple travel control.

(Item B5) The working vehicle 1 according to any one of items B1 to B4, wherein the steering system 18 is configured to, when steering the at least one front wheel 4F and the at least one rear wheel 4R by in-phase steering, cause steering angle of the at least one front wheel 4F to be the same as the steering angle of the at least one rear wheel 4R.

With the working vehicle 1 according to item B5, it is possible to steer the front wheel(s) 4F and the rear wheel(s) 4R by counter-phase steering or in-phase steering according to the travel route, and therefore maneuverability is further improved. Furthermore, with this, turning performance is high when the working vehicle 1 travels using counter-phase steering, and the orientation and the direction of travel of the vehicle body 2 are stable when the working vehicle 1 travels using in-phase steering, further contributing to an improvement in maneuverability.

(Item B6) The working vehicle 1 according to item B5, further including a prime mover 3 provided on the vehicle body 2, wherein the steering system 18 includes a steering pump 44 to be driven by power from the prime mover 3 to deliver hydraulic fluid, a front wheel steering valve apparatus 43F to adjust a pressure of the hydraulic fluid supplied from the steering pump 44 to adjust the steering angle of the at least one front wheel 4F, a rear wheel steering valve apparatus 43R to adjust the pressure of the hydraulic fluid supplied from the steering pump 44 to adjust the steering angle of the at least one rear wheel 4R, and an adjuster 45 to adjust a hydraulic pressure output from the front wheel steering valve apparatus 43F and a hydraulic pressure output from the rear wheel steering valve apparatus 43R, the adjuster 45 is configured to, when steering the at least one front wheel 4F and the at least one rear wheel 4R by the counter-phase steering, cause the hydraulic pressure output from the front wheel steering valve apparatus 43F to be higher than the hydraulic pressure output from the rear wheel steering valve apparatus 43, and, when steering the at least one front wheel 4F and the at least one rear wheel 4R by in-phase steering, cause the hydraulic pressure output from the front wheel steering valve apparatus 43F to be the same as the hydraulic pressure output from the rear wheel steering valve apparatus 43R.

With the working vehicle 1 according to item B6, since it is possible to adjust the steering angle of the front wheel 4F and the steering angle of the rear wheel 4R using the hydraulic fluid, it is possible to stably steer both the front wheel(s) 4F and the rear wheel(s) 4R regardless of road conditions. With this, maneuverability is further improved. Furthermore, this also makes it possible to steer the front wheel(s) 4F and the rear wheel(s) 4R by counter-phase steering or in-phase steering according to the travel route, and therefore maneuverability is further improved. Moreover, turning performance is high when the working vehicle 1 travels using the counter-phase steering, and the orientation and the direction of travel of the vehicle body 2 are stable when the working vehicle 1 travels using the in-phase steering, further contributing to an improvement in maneuverability.

(Item B7) The working vehicle 1 according to item B6, wherein the steering system 18 includes a rear wheel steering cylinder 41R to steer the at least one rear wheel 4R using the hydraulic pressure output from the rear wheel steering valve apparatus 43R, and a steering switching valve 42 to control hydraulic fluid supplied from the rear wheel steering valve apparatus 43R to the rear wheel steering cylinder 41R and switch between (i) a first position in which the at least one rear wheel 4R is steered in a direction opposite to the at least one front wheel 4F, (ii) a second position in which the at least one rear wheel 4R is steered in the same direction as the at least one front wheel 4F, and (iii) a third position in which steering of the at least one rear wheel 4R is restricted.

With the working vehicle 1 according to item B7, it is possible to steer the front wheel(s) 4F and the rear wheel(s) 4R by counter-phase steering or in-phase steering according to the travel route, or to restrict steering of the rear wheel 4R, and therefore maneuverability is further improved.

(Item B8) The working vehicle 1 according to any one of items B1 to B7, wherein the adjuster 45 includes a front wheel steering motor 101F to drive an input shaft of the front wheel steering valve apparatus 43F to rotate, and a rear wheel steering motor 45 R to drive an input shaft of the rear wheel steering valve apparatus 43R to rotate, and the front wheel steering motor 45F and the rear wheel steering motor 45R are configured to, when steering the at least one front wheel 4F and the at least one rear wheel 4R are to be steered by the counter-phase steering, change rotation speeds thereof to cause the hydraulic pressure output from the front wheel steering valve apparatus 43F to be higher than the hydraulic pressure output from the rear wheel steering valve apparatus 43R, and the front wheel steering motor 45F and the rear wheel steering motor 45R are configured to, when steering the at least one front wheel 4F and the at least one rear wheel 4R by the in-phase steering, change the rotation speeds thereof to cause the hydraulic pressure output from the front wheel steering valve apparatus 43F to be the same as the hydraulic pressure output from the rear wheel steering valve apparatus 43R.

With the working vehicle 1 according to item B8, it is possible to adjust the steering angle of the front wheel(s) 4F and the steering angle of the rear wheel(s) 4R by controlling the drive of the front wheel steering motor 101F and the rear wheel steering motor 101R, and therefore high maneuverability can be achieved through relatively easy travel control. Furthermore, this makes it possible to steer the front wheel(s) 4F and the rear wheel(s) 4R by counter-phase steering or in-phase steering according to the travel route, and therefore maneuverability is further improved. Moreover, with this, turning performance is high when the working vehicle 1 travels using counter-phase steering, and the orientation and the direction of travel of the vehicle body 2 are stable when the working vehicle 1 travels using in-phase steering, further contributing to an improvement in maneuverability.

(Item B9) The working vehicle 1 according to any one of items B1 to B8, wherein a direction in which the vehicle body 2 travels straight is a front-rear direction, a rear portion of the working device 6 is rearward of the at least one rear wheel 4R, and a length of the working vehicle 1 from the at least one rear wheel 4R to a rear end of the rear portion of the working device 6 is longer than a length of the working vehicle 1 from the at least one front wheel 4F to a front end of the vehicle body 2.

With the working vehicle 1 according to item B9, when the working vehicle 1 is turned by steering the front wheel(s) 4F and the rear wheel(s) 4R by the counter-phase steering, the front portion of the vehicle body 2 turns toward the direction of travel (turning direction) before the rear portion of the vehicle body 2 turns, and in accordance with this, the position of the working device 6 can be quickly changed.

(Item B10) The working vehicle 1 according to item B9, further including a liquid chemical tank 5 to store a liquid chemical, wherein the working device is a spreader 6 to spread the liquid chemical to a surrounding area of the vehicle body 2.

The working vehicle 1 according to item B10 is a liquid chemical spreading vehicle including a liquid chemical tank 5, and a spreader 6 as the working device. With the working vehicle 1, it is possible to smoothly travel even in a small space, making it possible to efficiently spread the liquid chemical.

(Item C1) A working vehicle 1 including a vehicle body 2, a traveling device 4 to support the vehicle body 2 such that the vehicle body 2 is allowed to travel, and a bumper assembly 8 provided on the vehicle body 2, wherein a direction in which the vehicle body 2 travels straight is a front-rear direction, and the bumper assembly 8 includes a bumper 71, a linkage mechanism 72 to connect the bumper 71 to the vehicle body 2 such that the bumper 71 is movable in the front-rear direction relative to the vehicle body 2, a first buffer 73 to, when an external force acts on the bumper 71 in the front-rear direction, provide an elastic force to the bumper 71 against the external force, and a second buffer 75 to, when the external force acts on the bumper 71, elastically contact the bumper 71.

With the working vehicle 1 according to item C1, an external force generated by collision of an obstacle or the like with the bumper 71 can be absorbed in two steps including the first buffer 73 and the second buffer 75, and therefore safety is improved.

(Item C2) The working vehicle 1 according to item C1, wherein the linkage mechanism 72 includes a link frame 83, 84 including a first end portion 73A pivotally supported by the vehicle body 2, and a second end portion 73B pivotally supported by the bumper 71, and the first buffer 73 includes a spring to provide the elastic force to the link frame 83, 84 in a direction in which the link frame 83, 84 swings about the first end portion 73A.

With the working vehicle 1 according to item C2, the elastic force of the first buffer 73 acts against the external force, and therefore safety is further improved.

(Item C3) The working vehicle 1 according to item C1 or C2, wherein the bumper assembly 8 includes a tension adjuster mechanism 74 to adjust a tension of the first buffer 73.

With the working vehicle 1 according to item C3, it is possible to adjust the elastic force of the first buffer 73 according to the operating environment, making it possible to provide more suitable cushioning performance. With this, safety is further improved.

(Item C4) The working vehicle 1 according to any one of items C1 to C3, wherein the linkage mechanism 72 includes a parallel linkage mechanism to translate the bumper 71 in the front-rear direction.

With the working vehicle 1 according to item C4, when an obstacle or the like collides with the bumper 71 in the front-rear direction, the bumper 71 also moves in the same direction, making it possible to provide more effective cushioning performance. With this, safety is further improved.

(Item C5) The working vehicle 1 according to item C4, further including a contact sensor 76 to detect that the external force acts on the bumper 71, and a controller 15 configured or programmed to control travel of the vehicle body 2 based on a detection result from the contact sensor 76, wherein the contact sensor 76 is positioned such that the contact sensor 76 detects the external force before the bumper 71 contacts the second buffer 75.

With the working vehicle 1 according to item C5, when an obstacle or the like collides with the bumper 71, it is possible to detect the contact of the obstacle with the bumper 71 before the bumper 71 contacts the second buffer 75, and restrict the travel of the vehicle body 2, and therefore safety is further improved.

(Item C6) The working vehicle 1 according to item C5, wherein the contact sensor 76 is positioned such that the contact sensor 76 detects the external force when the bumper 71 moves from a reference location to a first location, and the second buffer 75 is positioned such that the second buffer 75 contacts the bumper 71 when the bumper 71 moves from the first location to a second location.

With the working vehicle 1 according to item C6, when an obstacle or the like collides with the bumper 71, the external force is absorbed by the first buffer 73 and then the travel of the vehicle body 2 is restricted, and therefore safety is further improved.

(Item C7) The working vehicle 1 according to any one of items C1 to C6, wherein the bumper 71 includes a bumper main body 81 connected to the vehicle body 2 such that the bumper main body 81 is movable forward and rearward, and a bumper bar 82 provided on the bumper main body 81 such that the bumper bar 82 extends in a lateral direction.

With the working vehicle 1 according to item C7, the bumper bar 82 provided on the bumper main body 81 such that the bumper bar 82 extends in the lateral direction makes it possible to more reliably eliminate or reduce the likelihood that an obstacle or the like will collide with the vehicle body 2, and therefore safety is further improved. Furthermore, with this, when an obstacle or the like collides with the bumper bar 82 in the front-rear direction, the bumper main body 81 also moves in the same direction, making it possible to provide more effective cushioning performance. With this, safety is further improved.

(Item C8) The working vehicle 1 according to item C7, wherein a width direction of the vehicle body 2 is a left-right direction, and the bumper bar 82 includes a bumper front portion 82A extending in the left-right direction at a front portion of the vehicle body 2, and a pair of bumper end portions 82B extending diagonally rearward and outward, relative to the vehicle body 2, from a left end of the bumper front portion 82A and a right end of the bumper front portion 82A, respectively.

With the working vehicle 1 according to item C8, an obstacle or the like colliding with the bumper bar 82 from the front can be deflected diagonally leftward and rearward or diagonally rightward and rearward relative to the vehicle body 2 along the bumper end portions 82B, making it possible to provide more effective cushioning performance. With this, safety is further improved. Furthermore, with this, since the bumper end portions 82B extend diagonally rearward and outward relative to the vehicle body 2, it is possible to, when the working vehicle 1 turns while traveling, eliminate or reduce the likelihood that the bumper end portions 82B will accidentally contact an obstacle or the like present at a position not likely to contact the vehicle body 2 or the front wheel(s) 4F. With this, safety is further improved.

(Item C9) The working vehicle 1 according to any one of items C5 to C8, further including an object sensor 9 to detect an object in a surrounding area of the vehicle body 2, wherein the controller 15 is configured or programmed to control the travel of the vehicle body 2 based on a detection result from the object sensor 9 in addition to the detection result from the contact sensor 76, and the object sensor 9 is provided in or on the bumper 71.

With the working vehicle 1 according to item C9, it is possible to detect an obstacle or the like before the obstacle or the like collides with the bumper 71 and restrict the travel of the vehicle body 2, and therefore safety is further improved.

When the obstacle or the like collides with the object sensor 9, this may cause a decrease in object detection accuracy due to improper installation or deformation. However, with the working vehicle 1 according to item C9, when an obstacle or the like is not detected for some reason and the obstacle or the like collides with the bumper 71, the object sensor 9 also moves in the front-rear direction together with the bumper 71, making it possible to reliably eliminate or reduce the likelihood that the obstacle or the like will collide with the object sensor 9. With this, sufficient safety is ensured even after long-term use.

(Item C10) The working vehicle 1 according to item C9, wherein the object sensor 9 is provided in a portion of an area below the bumper 71 that is closer to the vehicle body 2 than the other portions of the area.

The working vehicle 1 according to item C10 makes it possible to more reliably eliminate or reduce the likelihood that an obstacle or the like will collide with the object sensor 9, and therefore sufficient safety is ensured even after long-term use.

(Item C11) The working vehicle 1 according to item C9 or C10, wherein the bumper 71 includes a sensor bracket 78 to support the object sensor 9, and the sensor bracket 78 includes a protection frame portion 78U, 78L projecting leftward and rightward relative to the object sensor 9.

With the working vehicle 1 according to item C11, the protection frame portion 78U, 78L of the sensor bracket 78 makes it possible to reliably eliminate or reduce the likelihood that an obstacle or the like will collide with the object sensor 9, and therefore sufficient safety is ensured even after long-term use.

(Item C12) The working vehicle 1 according to any one of items C5 to C11, wherein the controller 15 is configured or programmed to stop the travel of the vehicle body 2 when the contact sensor 76 is in a state in which the contact sensor 76 detects the external force.

With the working vehicle 1 according to item C12, it is possible to stop the travel of the vehicle body 2 at an early stage, and therefore safety is further improved.

(Item C13) The working vehicle 1 according to any one of items C5 to C12, wherein the controller is configured or programmed to, when the contact sensor is in a state in which the contact sensor detects the external force, allow the vehicle body to travel only in a forward direction or a rearward direction until the contact sensor enters a state in which the contact sensor does not detect the external force.

With the working vehicle 1 according to item C13, when an obstacle or the like collides with the bumper 71, the vehicle body 2 is allowed to travel only in the forward direction or the rearward direction until the obstacle is not colliding with the bumper 71 anymore, and therefore safety is further improved.

While an embodiment of the present invention has been described above, it is to be understood that the embodiment disclosed herein is considered as examples in all aspects and is not considered as limitations. The scope of the present invention is to be determined not by the foregoing description but by the claims, and is intended to include all variations and modifications within the scope of the claims and their equivalents.

### Reference Signs List

- 1: Working vehicle
- 2: Vehicle body
- 3: Prime mover
- 4: Traveling device
- 4F: Front wheel
- 4R: Rear wheel
- 5: Liquid chemical tank (material storage portion)
- 6: Spreader (working device)
- 6A: Jetting head
- 6B: Air blower
- 6C: Spreading pump
- 7: Hood
- 7E: Rear end portion (facing end portion)
- 8: Bumper assembly
- 9: Object sensor
- 10: Radiator assembly
- 11: Cooling fan
- 12: Oil cooler
- 13: Exhauster
- 14: Air cleaner
- 15: Controller
- 16: Pump assembly
- 16A: Travel pump
- 16B: Spreading pump
- 17: Travel motor
- 18: Steering system
- 19: Spreading motor
- 20: Air passage chamber
- 31: First air passage surface
- 32: Second air passage surface
- 41F: Front wheel steering cylinder
- 41R: Rear wheel steering cylinder
- 42: Steering switching valve
- 43F: Front wheel steering valve apparatus
- 43R: Rear wheel steering valve apparatus
- 44: Steering pump
- 45: Adjuster
- 45A: Steering motor
- 45B: Gear assembly
- 71: Bumper
- 72: Linkage mechanism
- 73: First buffer
- 74: Tension adjuster mechanism
- 75: Second buffer
- 83: First link frame (link frame)
- 84: Second link frame (link frame)
- 90: Body cover
- 90A: First inclined surface portion
- 90B: Second inclined surface portion
- 90E: Front end portion (facing end portion)
- 91: Gap (air intake opening)
- 92: Rear end plate
- 93: Side cover
- 94: Upper cover
- 95: First projecting portion
- 96: Second projecting portion

## Claims

1. A working vehicle comprising:
a vehicle body;
a prime mover provided on the vehicle body;
a traveling device to support the vehicle body such that the vehicle body is allowed to travel;
a material storage portion to store a work material which is a material for work; and
a radiator assembly to cool a coolant circulated through the prime mover via heat exchange with outside air; wherein
a direction in which the vehicle body travels straight is a front-rear direction;
the prime mover is provided forward of the material storage portion with an air passage chamber between the prime mover and the material storage portion, the air passage chamber being a chamber in which the outside air flows; and
the radiator assembly is provided in the air passage chamber.

2. The working vehicle according to claim 1, further comprising a cooling fan to blow the outside air from an area where the material storage portion is present toward the prime mover.

3. The working vehicle according to claim 1, further comprising a cooling fan to blow the outside air to the prime mover; wherein
the radiator assembly includes a first air passage surface positioned to face the material storage portion, and a second air passage surface positioned to face the prime mover; and
the cooling fan is adjacent to the second air passage surface.

4. The working vehicle according to claim 1, further comprising an oil cooler to cool hydraulic fluid for at least one hydraulic device provided on the vehicle body via heat exchange with the outside air; wherein
the oil cooler is provided in the air passage chamber.

5. The working vehicle according to claim 4, wherein
the radiator assembly includes a first air passage surface positioned to face the material storage portion and a second air passage surface positioned to face the prime mover; and
the oil cooler is adjacent to the first air passage surface.

6. The working vehicle according to claim 5, further comprising a cooling fan to blow the outside air to the prime mover; wherein
the cooling fan is adjacent to the second air passage surface.

7. The working vehicle according to claim 1, further comprising:
a travel pump to be driven by the prime mover to deliver hydraulic fluid; and
a travel motor to drive the traveling device by the hydraulic fluid delivered by the travel pump; wherein
the travel pump is forward of and adjacent to the prime mover.

8. The working vehicle according to claim 1, further comprising an exhauster to guide air discharged from the prime mover to an outside of the working vehicle; wherein
the exhauster is forward of and adjacent to the prime mover.

9. The working vehicle according to claim 1, further comprising an air cleaner to clean air to be supplied to the prime mover; wherein
the air cleaner is provided in the air passage chamber.

10. The working vehicle according to any one of claims 1 to 9, further comprising a spreader to spread a liquid chemical to a surrounding area of the vehicle body; wherein
the material storage portion is a liquid chemical tank to store the liquid chemical.

11. The working vehicle according to claim 10, further comprising:
a spreading pump to cause the spreader to spread the liquid chemical; and
a spreading motor to provide rotation power to the spreader; wherein
the spreading pump and the spreading motor are downward of the radiator assembly in the air passage chamber.

12. The working vehicle according to claim 1, further comprising:
a hood to cover the prime mover; and
a body cover to cover the material storage portion; wherein
an air intake opening in communication with the air passage chamber is defined between a facing end portion of the hood and a facing end portion of the body cover that face each other.

13. The working vehicle according to claim 12, wherein at least a portion of the air intake opening is rearward of the air passage chamber.

14. The working vehicle according to claim 13, wherein the facing end portion of the body cover extends toward an interior of the hood.
